# EUROPEAN PATENT APPLICATION

(11) **EP 4 152 454 A1**
(43) Date of publication of application: **22.03.2023**
(21) Application number: 22195483.7
(22) Date of filing: 14.09.2022
(51) Int. Cl.: H01M 10/04, H01M 50/46, H01M 10/0583

(54) **ELECTRODE ASSEMBLY FOR USE IN A BATTERY, APPARATUS FOR MANUFACTURING THE SAME AND METHOD FOR MANUFACTURING THE SAME**

(30) Priority: 16.09.2021 KR 20210124050; 16.09.2021 KR 20210124049; 16.09.2021 KR 20210124051
(71) Applicant: LG Energy Solution, Ltd., Seoul 07335 (KR)
(72) Inventor: KIM, Jin Gon, Daejeon 34122 (KR); LEE, Byeong Kyu, Daejeon 34122 (KR); JUNG, Su Taek, Daejeon 34122 (KR)
(74) Representative: Goddar, Heinz J.

(57) **Abstract**

Disclosed herein is an apparatus for manufacturing an electrode assembly for use in a battery, a method of manufacturing an electrode assembly for use in a battery, an electrode assembly for use in a battery and a battery cell comprising an electrode assembly. The apparatus comprises an electrode supply unit configured to provide a plurality of electrodes and a separator supply unit configured to provide a continuous separator sheet. The apparatus further comprises a stacking table for stacking the electrodes thereon with the separator sheet folded between the electrodes to form the electrode assembly and a separator guide configured to guide the folding of the separator sheet. The apparatus also comprises a first adhesive applicator configured to apply an adhesive to an electrode arranged on the stacking table and/or to at least a part of the separator sheet located between the separator guide and the stacking table. The separator guide and the first adhesive applicator are configured to move along a first direction relative to the stacking table and/or vice-versa.

## Description

### TECHNICAL FIELD

The present disclosure relates to an electrode assembly for use in a battery, an apparatus for manufacturing the same and a method for manufacturing the same, and more particularly, to an electrode assembly for use in battery in which electrodes and a separator sheet are stacked in a Z-folding (or zigzag-folding) type, an apparatus for manufacturing the same and a method for manufacturing the same.

### BACKGROUND

Generally, the types of secondary batteries (rechargeable batteries) include nickelcadmium batteries, nickel-hydrogen batteries, lithium-ion batteries, lithium-ion polymer batteries, and the like. Such secondary batteries are applied and used not only to/in small-sized products such as digital cameras, P-DVD, MP3P, cellular phones, PDA, portable game devices, power tools and E-bikes, but also to/in large-sized products demanding high output such as electric and hybrid vehicles, and a power storage device for storing surplus generated power or new renewable energy and a backup power storage device.

In order to manufacture such a secondary battery, first, an electrode active material slurry may be applied to a cathode current collector and an anode current collector to prepare a cathode and an anode, which may be stacked on both sides (opposite sides) of a separator, thereby forming an electrode assembly having a predetermined shape. Then, the electrode assembly may be housed in a battery case, and an electrolytic solution may be injected and the housing may then be sealed, e.g. to form a battery cell.

Electrode assemblies may be classified into various types. For example, there may be mentioned a simple stack type in which cathodes, separators, and anodes simply cross (or are overlapped) with each other and they are continuously stacked without manufacturing a unit cell, a lamination & stack type (L&S type) in which unit cells (e.g. elementary or fundamental battery units comprising a cathode, a separator and an anode) are first manufactured using cathodes, separators, and anodes, and then these unit cells are stacked, a stack & folding type (S&F type) in which a plurality of unit cells are spaced apart and attached to a surface of a separator sheet having a long length (e.g. an elongated or strip-like separator sheet), and the separator sheet is repeatedly folded (or rolled) in the same direction from one end, a Z-folding type (zigzag-folding type) in which a plurality of electrodes or unit cells are alternately attached to a surface and the other (opposite) surface of a separator sheet whose length is long on one side (e.g. an elongated or strip-like separator sheet), and the separator sheet is repeatedly and alternately folded in a specific direction from one end and then folded in the opposite direction (e.g. such that the separator sheet assumes a zigzag or meandering shape), and the like. Among them, the Z-folding type has high alignment degree and impregnation degree of the electrolytic solution, and thus is often used in recent years.

Conventionally, however, after the electrodes and the separator sheet are stacked in this Z-folding type, no additional lamination process is performed, which may cause a problem that the electrodes and the separator sheet do not (or not sufficiently) adhere to each other and thus, the electrodes may be offset or displaced from a target position. To solve this problem, an additional lamination process may be performed after stacking the electrodes and the separator sheet, but the overall thickness of the stacked body in which the electrodes and the separator sheet are stacked may be large, which may cause a problem that heat is not transferred to the interior of the stacked body, and thus the adhesive strength may be lowered. Additionally, in order to perform such an additional lamination process, there may also be a problem that the electrodes may be offset or displaced from the target position in the process of transferring the stacked body. This problem may be aggravated further depending on the material of the separator sheet when the adhesive strength of the separator sheet itself is low.

Therefore, there is a need to develop a Z-folding type electrode assembly for use in a battery (e.g. in a battery cell) having improved battery cell performance, while preventing the electrodes from being offset or displaced from a target position, an apparatus for manufacturing the same, and a method for manufacturing the same.

### SUMMARY OF THE DISCLOSURE

### TECHNICAL PROBLEM

It is an object of the present disclosure to provide an electrode assembly for use in a battery in which electrodes and a separator sheet are stacked in a Z-folding type, and the electrodes can be prevented from being offset or displaced from a target position, an apparatus for manufacturing the same and a method for manufacturing the same.

The objects of the present disclosure are not limited to the aforementioned object, and other objects which are not described herein should be clearly understood by those skilled in the art from the following detailed description and the accompanying drawings.

### TECHNICAL SOLUTION

This object is met by an apparatus for manufacturing an electrode assembly for use in a battery according to claim 1, a method of manufacturing an electrode assembly for use in a battery according to claim 9, an electrode assembly according to claim 13 and a battery cell according to claim 15. Examples thereof are detailed in the dependent claims.

The present disclosure provides an apparatus for manufacturing an electrode assembly for use in a battery (e.g. in a battery cell), in particular in a secondary battery (e.g. in a battery cell of or for use in a secondary battery).

The apparatus comprises an electrode supply unit configured to provide (or supply) a plurality of (individual or separate) electrodes, e.g. cathodes and/or anodes. The electrode supply unit may for example be configured to provide the electrodes from an electrode sheet (e.g. a continuous electrode sheet). The electrode supply unit may e.g. be or comprise an electrode reel, from which the electrode sheet may be unwound. In some examples, the electrode supply unit may be configured to cut the electrodes from the electrode sheet. Additionally or alternatively, the electrode supply unit may e.g. be configured to provide the electrodes from a supply of pre-formed electrodes such as a stack of pre-formed electrodes. The electrode supply unit may be configured to arrange (e.g. place or seat) one or more electrodes on a stacking table, e.g. as described below.

The apparatus further comprises a separator supply unit configured to provide (or supply) a continuous separator sheet, for example to advance or move the separator sheet (e.g. a front end or front portion thereof) towards a stacking table as described below. The separator supply unit may for example be or comprise a separator reel, from which the separator sheet may be unwound. The separator supply unit may e.g. be configured to unwind the separator sheet from the separator reel and to advance the separator sheet from the separator reel towards the stacking table. The continuous separator sheet may have a length that is much larger than a length or physical dimension of the electrodes, e.g. at least five times, in some examples at least ten times, in one example at least twenty times the length of physical dimension of the electrodes. Put differently, the continuous separator sheet may not be cut or otherwise formed or shaped into a specific shape or form (e.g. to match a physical dimension of the electrodes) along its length, but may e.g. be a single continuous piece of material. The separator sheet may be configured to be folded and may e.g. comprise or consist of a flexible material. The separator sheet may be configured to physically separate and electrically insulate electrodes from each other and may e.g. comprise or consist of an electrically insulating material. The separator sheet maybe configured to accommodate an electrolytic solution and may e.g. comprise or consist of porous material.

The apparatus further comprises a stacking table for stacking the electrodes thereon with the separator sheet folded between the electrodes to form the electrode assembly. The stacking table may for example comprise a surface (e.g. an upper or top surface) on which the first and second electrodes and the separator sheet can be arranged (e.g. placed or seated on).

The apparatus also comprises a separator guide configured to guide the folding (e.g. a folding direction) of the separator sheet. The separator guide may for example be configured to guide the folding of the separator sheet by controlling a position of the separator sheet (e.g. a position at which the separator sheet is provided or supplied by or from the separator supply unit) relative to the stacking table. The separator guide may comprise one or more guiding surfaces configured to come in contact with the separator sheet to guide the folding, e.g. a pair of opposing guiding surfaces between which the separator sheet may be arranged. The separator guide may for example comprise one or more guiding rollers (or rolls), e.g. a pair of guiding rollers between which the separator sheet may be arranged. The separator guide and the stacking table are configured to move relative to each other (e.g. by moving one or both of the separator guide and the stacking table) as described below, for example to perform the folding of the separator sheet on the stacking table.

The electrode supply unit may be configured to alternately arrange (e.g. place or seat) electrodes (e.g. first and second electrodes of different polarity) on the stacking table, for example to form a stack in which first and second electrodes are arranged alternately (i.e. a second electrode on top of a first electrode, another first electrode on top of the second electrode and so on or vice-versa). The separator guide may guide the folding of the separator sheet such that the separator sheet is folded between the first and second electrodes. The separator guide may guide the folding of the separator sheet such that the separator sheet is folded in a zigzag or meandering shape (Z-folding), e.g. such that the separator sheet extends from left to right between a first electrode and a second electrode and from right to left between said second electrode and another first electrode arranged on said second electrode and so on. Preferably, the separator sheet is folded without cutting the separator sheet, i.e. such that the separator sheet remains a continuous sheet.

The apparatus further comprises a first adhesive applicator configured to apply (e.g. deposit or coat) an adhesive to (e.g. on) an electrode arranged on the stacking table (e.g. arranged on a surface of the stacking table or on a portion of the separator sheet arranged on the stacking table). Additionally or alternatively, the first adhesive applicator may be configured to apply the adhesive to at least a part of the separator sheet located between the separator guide and the stacking table (e.g. to regions or portions of the separator sheet that an electrode is to be arranged on and/or covered with). The first adhesive applicator may for example be or comprise a nozzle and/or a dispenser (which may also be referred to as an upper nozzle or dispenser). The first adhesive applicator may be configured to apply the adhesive by spraying, dispensing and/or otherwise depositing the adhesive, e.g. at/on a surface of the respective object.

The separator guide and the first adhesive applicator are configured to move relative to the stacking table at least along a first direction and/or vice-versa. In other words, the separator guide and the first adhesive applicator may be configured to move along the first direction (for example to move or translate linearly, e.g. along a straight line) and, additionally or alternatively, the stacking table may be configured to move along the first direction (e.g. move or translate linearly) such that the respective elements can be moved relative to each other along the first direction. The motion of the respective elements may be along a straight path or line (e.g. only along the first direction) and/or may be along a curved path (e.g. at least in part also along a second direction perpendicular to the first direction). The stacking table may for example move in a direction opposite to a direction that the separator guide and the first adhesive applicator are moving in. For example, some or all of the separator guide, the first adhesive applicator and the stacking table may be configured to move back and forth (e.g. to linearly reciprocate left and right) between different parts of the electrode supply unit such as a first electrode placement device and a second electrode placement device. In one example, the stacking table may be configured to rotate back and forth (e.g. to perform a reciprocating rotating motion), either instead of or in addition to a linear motion or translation. In some examples, some or all of the separator guide, the first adhesive applicator and the second adhesive applicator described below may be fixed relative to each other. The separator guide, the first adhesive applicator and/or the second adhesive applicator may e.g. be mounted in or on a common carriage configured to move along the first direction.

As used herein, the first direction may for example be a direction that is different from a stacking direction of the electrode assembly (e.g. different from a normal direction of a surface of the stacking table that the electrodes are stacked on), for example a direction that is tilted or inclined (e.g. at an angle) with respect to the stacking direction, in particular a direction that is perpendicular to the stacking direction (e.g. at an angle between 75° and 105° to the stacking direction, in some examples between 85° and 95° to the stacking direction, in one example 90° to the stacking direction). Additionally or alternatively, the first direction may for example be a direction extending between different parts of the apparatus and in particular different parts of the electrode supply unit such as e.g. between first and second electrode supply units and/or between the first electrode placement device and the second electrode placement device. In some examples, the first direction may be horizontal or substantially horizontal (e.g. at an angle of between 75° and 105° to a direction of gravity).

In some examples, the stacking table is fixed or configured to be fixed at least along the first direction (in some examples along every direction), but the separator guide and the first adhesive applicator are configured to move back and forth along the first direction. The stacking table may for example be permanently fixed or may be configured to be moved, e.g. for alignment and/or servicing purposes, before being temporarily fixed, e.g. using fixation tools such as screws or fasteners. Having the stacking table fixed, e.g. while arranging an electrode thereon, may allow for more precise positioning of the electrodes.

The first adhesive applicator may be configured to apply the adhesive to said electrode arranged on the stacking table while moving along the first direction (e.g. simultaneously at least in part). For example, the first adhesive applicator maybe configured to move along (e.g. across or past) the stacking table to apply the adhesive to said electrode.

In some examples, the electrode supply unit may comprise a first electrode supply unit configured to provide a plurality of first electrodes (e.g. cathodes or anodes) and a second electrode supply unit configured to provide a plurality of second electrodes (e.g. of an opposite polarity, i.e. anodes and cathodes, respectively). Each of the first and second electrode supply units may be embodied as described above for the (main) electrode supply unit. The first/second electrode supply unit may for example be configured to provide the first/second electrodes from a first/second electrode sheet (e.g. a continuous first/second electrode sheet). The first/second electrode supply unit may e.g. be or comprise a first/second electrode reel, from which the first/second electrode sheet may be unwound. In some examples, the first/second electrode supply unit may be configured to cut the first/second electrodes from the first/second electrode sheet. Additionally or alternatively, the first/second electrode supply unit may e.g. be configured to provide the first/second electrodes from a supply of pre-formed electrodes such as a stack of pre-formed first/second electrodes. The first/second electrode supply unit may be configured to arrange (e.g. place or seat) one or more first/second electrodes on a stacking table, e.g. as described below.

The separator guide and the first adhesive applicator may be configured to move back and forth between the first and second electrode supply units. Additionally or alternatively, the stacking table may be configured to move back and forth between the first and second electrode supply units. The respective elements may for example be configured to move back and forth between a first configuration adjacent to (e.g. facing) the first electrode supply unit (e.g. an electrode placement device thereof) and a second configuration adjacent to (e.g. facing) the second electrode supply unit (e.g. an electrode placement device thereof). In one example, the stacking table may be configured to rotate back and forth (e.g. to perform a reciprocating rotating motion) between said first and second electrode supply units (e.g. electrode placement devices thereof).

The first electrode supply unit may be configured to arrange a first electrode on a first portion (e.g. on a first region) of the separator sheet. The second electrode supply unit may be configured to arrange a second electrode on a second portion (e.g. on a second region) of the separator sheet. The second portion may be adjacent to (e.g. adjoin or border) the first portion. The second portion may be arranged upstream or downstream of the first portion along the length of the separator sheet, e.g. such that the first portion is arranged on the stacking table before the second portion or vice-versa.

In some examples, the apparatus may further comprise a second adhesive applicator. Put differently, the apparatus may comprise a pair of adhesive applicators, e.g. a pair of (upper) nozzles. The second adhesive applicator may be embodied as described above for the first adhesive applicator.

The first adhesive applicator may be configured to apply the adhesive to some or all of a first electrode arranged on the stacking table, at least a part of a portion of the separator sheet that the first electrode is to be arranged on and/or at least a part of a portion of the separator sheet that is to cover said first electrode in the electrode assembly. For example, the first adhesive applicator may be configured to apply the adhesive to a first electrode arranged on the stacking table prior to said first electrode being covered by a portion of the separator sheet.

The second adhesive applicator may configured to apply the adhesive to some or all of a second electrode arranged on the stacking table, at least a part of a portion of the separator sheet that the second electrode is to be arranged on and/or at least a part of a portion of the separator sheet that is to cover said second electrode in the electrode assembly. For example, the second adhesive applicator may be configured to apply the adhesive to a second electrode arranged on the stacking table prior to said second electrode being covered by a portion of the separator sheet.

The separator guide may be configured to guide the separator sheet such that the first and second adhesive applicators are arranged on opposite sides of the separator sheet (e.g. along the first direction). The first adhesive applicator may be configured to apply the adhesive to a first surface of the separator sheet and/or to an electrode (e.g. a first electrode) arranged on said first surface. The second adhesive applicator may be configured to apply the adhesive to a second surface of the separator sheet opposite to the first surface and/or to an electrode (e.g. a second electrode) arranged on said second surface. The first and second adhesive applicators may for example be arranged on opposite sides of the separator guide, e.g. such that the separator guide is arranged between (for example interposed between) the first and second adhesive applicators.

In some examples, the second adhesive applicator may be configured to apply the adhesive to said part of said portion of the separator sheet that the second electrode is to be arranged on while (e.g. simultaneously at least in part) the first adhesive applicator applies the adhesive to said first electrode arranged on the stacking table. Put differently, the first and second adhesive applicators may be configured to apply the adhesive simultaneously at least in part, e.g. to said portion of the separator sheet and to said first electrode. For example, the first adhesive applicator may move along (e.g. across) said first electrode to apply the adhesive thereto and at the same time the second adhesive applicator may move along (e.g. across) said portion of the separator sheet to apply the adhesive thereto. When applying the adhesive to said portion of the separator sheet, this portion of the separator sheet may for example be arranged above (but not on) the stacking stable. Said portion may e.g. be being folded or arranged on the stacking table at this point in time.

Additionally or alternatively, the first adhesive applicator may be configured to apply the adhesive to said part of said portion of the separator sheet that the first electrode is to be arranged on while the second adhesive applicator applies the adhesive to said second electrode arranged on the stacking table, e.g. as described above for the opposite case of the second adhesive applicator applying the adhesive to a part of the separator sheet while the first adhesive applicator applies the adhesive to the first electrode arranged on the stacking table.

In some examples, one or both of the first adhesive applicator and the second adhesive applicator may be configured to apply the adhesive to an electrode arranged on the stacking table while (e.g. at the same time or simultaneously at least in part) the separator guide moves along the first direction (e.g. towards one of the first and second electrode supply units) to cover said electrode with the separator sheet. In other words, the apparatus may be configured to simultaneously at least in part apply the adhesive to an electrode and to fold the separator sheet thereon. For example, the separator guide may arrange a portion of the separator sheet on a portion of said electrode to which the adhesive has already been applied while the first adhesive applicator applies the adhesive to another portion of the electrode.

In some examples, the apparatus may further comprise one or more bottom-side applicators configured to apply an adhesive to a (first) surface of an electrode (e.g. a first electrode and/or a second electrode). Said first surface may be to face the stacking table when the respective electrode is arranged thereon and may thus also be referred to as a bottom surface. The bottom-side applicators may be configured to apply the adhesive prior to the respective electrode being arranged on the separator sheet. The bottom-side applicators may for example be or comprise a nozzle and/or a dispenser (which may also be referred to as a lower nozzle or dispenser).

The electrode supply unit may comprise an electrode placement device (e.g. an electrode placement head or header) that is configured to hold (e.g. adsorb or grab) an electrode and to place (e.g. seat) said electrode on the stacking table. The electrode supply unit may for example comprise a first electrode placement device for holding and placing a first electrode and/or a second electrode placement device for holding and placing a second electrode. One or more of said one or more bottom-side applicators may be configured to apply the adhesive to the bottom surface of said electrode while the electrode is being held by said electrode placement device.

Additionally or alternatively, the electrode supply unit may comprise a transfer device (e.g. a roller conveyer, a conveyer belt and/or a moving floor) configured to transfer an electrode on a transfer surface of said transfer device towards the stacking table and/or towards an electrode placement device. The electrode supply unit may for example comprise a first transfer device for transferring first electrodes and/or a second transfer device for transferring second electrodes. Said transfer surface may comprise one or more openings (e.g. holes, cut-outs, slits and/or grooves). One or more of said one or more bottom-side applicators may be configured to apply the adhesive to the bottom surface of said electrode through said one or more openings.

In some examples, the first adhesive applicator and/or the second adhesive applicator may be configured to apply the adhesive uniformly (e.g. to spread the adhesive homogeneously over the respective object). Preferably, the first adhesive applicator and/or the second adhesive applicator is/are configured to apply the adhesive selectively, in particular by applying a plurality of spots of the adhesive and/or a plurality of lines of the adhesive, e.g. as detailed below for the electrode assembly according to the present disclosure.

In specific examples, the first adhesive applicator and/or the second adhesive applicator may be configured to apply the respective adhesive such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the first adhesive applicator and/or the second adhesive applicator maybe configured such that the respective adhesive to occupies 0.01% to 50%, particularly 0.05% to 30%, and more particularly 0.08% to 1% of a total area of the respective adjacent electrode in a plan view (i.e., normal to the respective adjacent electrode).

In some examples, the apparatus may be configured to execute some or all of the steps of a method of manufacturing an electrode assembly according to any one of the examples disclosed herein. The apparatus may for example comprise a controller configured to control some or all of the components of the apparatus such as the first and second electrode supply units, the separator supply unit, the stacking table, the separator guide and the first and second adhesive applicators to execute the respective steps. The controller may be implemented in hardware, software or a combination thereof and may for example comprise a processor and a storage device storing instructions for execution by the processor to provide the respective functionality.

In some examples, the electrode supply unit may be or comprise an electrode reel on which an electrode sheet having a plurality of electrodes formed thereon is unwound. In some examples, the separator supply unit may be or comprise a separator reel in which a separator sheet that is folded when the electrodes are seated, covers the electrodes and is stacked with the electrodes is unwound. In some examples, the stacking table may be or comprise a table on which the electrodes and the separator sheet are seated on the upper surface. In some examples, the separator guide may guide a folding direction of the separator sheet. In some examples, the first adhesive applicator may be or comprise a pair of upper nozzles that apply an adhesive to at least a part of the upper portion of the electrode seated on the table. In some examples, the separator guide and the pair of upper nozzles may linearly reciprocate left and right on the basis of the table. In some examples, the table may be fixed.

The present disclosure further provides a method of manufacturing an electrode assembly for use in a battery. The method may for example be executed with an apparatus for manufacturing an electrode assembly according to any one of the examples disclosed herein, but is not limited thereto and may also be executed with other suitable apparatuses.

The method comprises arranging a first portion of a continuous separator sheet on a stacking table, e.g. on a surface of the stacking table or on an electrode (e.g. a first or second electrode) arranged on the stacking table (e.g. on another portion of the separator sheet that is already arranged on the stacking table). The first portion of the separator sheet may be provided by a separator supply unit, e.g. as described above, for example by advancing the separator sheet towards the stacking table and/or a separator guide. In some examples, the separator sheet may be unwound from a separator reel (e.g. along or through the separator guide). The first portion of the separator sheet may be arranged on the stacking table using said separator guide (e.g. as described above), for example by moving the stacking table and the separator guide relative to each other to fold or place the first portion of the separator sheet on the stacking table, e.g. by moving the stacking table and/or the separator guide along the first direction as described above.

The method further comprises arranging a first electrode on said first portion of the separator sheet, e.g. using an electrode supply unit. This may for example comprise placing the first electrode on the first portion using an electrode placement device of the electrode supply unit. This may further comprise picking up or grabbing the first electrode with the electrode placement device, e.g. from an electrode stack or from a transfer device. In some examples, this may also comprise forming the first electrode, for example by cutting a first electrode sheet, wherein the first electrode sheet may e.g. be unwound from a first electrode reel.

The method further comprises applying an adhesive to said first electrode and/or to at least a part of a second portion of said separator sheet (e.g. to a surface thereof that is to face or cover the first electrode) using a first adhesive applicator, for example a first (upper) nozzle or dispenser. The adhesive may be applied (e.g. sprayed, dispensed or otherwise deposited) uniformly or preferably selectively, e.g. in a plurality of spots and/or lines as described below for the electrode assembly according to the present disclosure. The adhesive may be applied while moving the first adhesive applicator along (e.g. across) the second portion and/or the first electrode, e.g. by moving the first adhesive applicator along the first direction. The adhesive may be applied prior to, while and/or after arranging the first electrode on the first portion of the separator sheet. The second portion may be adjacent to (e.g. border or adjoin) the first portion, for example as described above. The second portion may be arranged upstream of the first portion along the length of the separator sheet.

The method further comprises folding said separator sheet to cover said first electrode arranged on the first portion with said second portion of the separator sheet, e.g. such that the second portion extends parallel to the first portion. The first electrode is covered with the second portion such that the adhesive is arranged between (e.g. in contact with both of) said first electrode and said second portion. The separator sheet is folded using a separator guide to guide the separator sheet, e.g. by moving the stacking table and the separator guide relative to each other, for example by moving the stacking table and/or the separator guide along the first direction.

While (e.g. simultaneously at least in part) applying the adhesive and/or while folding said separator sheet, the separator guide and the first adhesive applicator are moved along the first direction relative to the stacking table and/or vice-versa. For example, the separator guide and the first adhesive applicator may be moved (e.g. linearly) along the first direction while applying the adhesive and/or while folding said separator sheet, e.g. towards a first electrode supply unit and/or a first electrode placement device. Additionally or alternatively, the stacking table maybe moved (e.g. linearly) along the first direction while applying the adhesive and/or while folding said separator sheet, e.g. in a direction opposite to the direction in which the separator guide and the first adhesive applicator are moved, for example towards a second electrode supply unit and/or the second electrode placement device. The separator guide, the first adhesive applicator and/or the stacking table may for example be moved such that the separator guide and the first adhesive applicator move or pass across the stacking table (e.g. along an entire length or width of the stacking table). In one example, the separator guide and the first adhesive applicator may move back and forth (e.g. reciprocate linearly) relative to the stacking table and/or vice-versa.

In some examples, the method may further comprise arranging a second electrode on said second portion of the separator sheet, in particular after folding said separator sheet to cover said first electrode. The second electrode may for example be arranged using an electrode supply unit, e.g. as described above. The second electrode may be arranged on the second portion as described above for arranging the first electrode on the first portion, e.g. by cutting a second electrode sheet unwound from a second electrode reel, picking up the second electrode with an electrode placement device and/or placing the second electrode on the second portion using the electrode placement device. The first and second electrodes and the first and second portions of the separator sheet may form a unit cell of the electrode assembly, e.g. an elementary structure that can be arranged (e.g. stacked) repeatedly to form the electrode assembly.

The method may further comprise applying an adhesive to said second electrode and/or to at least a part of a third portion of said separator sheet (e.g. to a surface thereof that is to face or cover the second electrode) using a second adhesive applicator (for example a second (upper) nozzle or dispenser), e.g. as described above for applying the adhesive using the first adhesive applicator. The adhesive may be applied prior to, while and/or after arranging the second electrode on the second portion of the separator sheet. The third portion may be adjacent to (e.g. border or adjoin) the second region. The third portion may be arranged upstream of the second portion along the length of the separator sheet. In some examples, the first and third portion of the separator sheet may collectively be referred to or be part of a first region of the separator sheet (e.g. a first region on which first electrodes are to be arranged on).

The method may further comprise folding said separator sheet to cover said second electrode arranged on the second portion with said third portion of the separator sheet, e.g. as described above for folding the separator sheet to cover the first electrode. For covering the second electrode, the separator sheet may be folded in an opposite direction as for covering the first electrode, e.g. such that the separator sheet assumes a zigzag or meandering shape. The separator sheet may be folded such that the adhesive is arranged between (e.g. in contact with both of) said second electrode and said third portion. The separator sheet may be folded using the separator guide to guide the separator sheet, e.g. as described above.

Preferably, the separator guide and the second adhesive applicator are moved along the first direction relative to the stacking table and/or vice-versa while (e.g. simultaneously at least in part) applying the adhesive using the second adhesive applicator and/or while (e.g. simultaneously at least in part) folding said separator sheet to cover said second electrode. The separator guide and the second adhesive applicator may for example be moved towards a second electrode supply unit and/or a second electrode placement device. Additionally or alternatively, the stacking table may for example be moved towards the first electrode supply unit and/or the first electrode placement device.

In some examples, the stacking table may be fixed (i.e. may not move) at least while applying the adhesive and/or folding said separator sheet. The stacking table may be fixed at least along the first direction, in some examples along every direction. The stacking table may for example be fixed permanently or temporarily (e.g. only during execution of the method according to the present disclosure, i.e. manufacture of the electrode assembly), for example as described above. Some or all of separator guide, the first adhesive applicator and/or the second adhesive applicator may be moved along the first direction (e.g. reciprocate linearly) while applying the adhesive and/or folding said separator sheet.

In some examples, the adhesive maybe applied to said first electrode while folding said separator sheet to cover said first electrode. Additionally or alternatively, the adhesive may be applied to said second electrode while folding said separator sheet to cover said second electrode. Put differently, the steps of applying adhesive to an electrode and covering said electrode with (a portion of) the separator sheet may be executed simultaneously at least in part, e.g. by moving the separator guide as well as the first adhesive applicator relative to the stacking table and/or vice-versa. For example, a portion of the separator sheet may be arranged on a portion of the respective electrode to which the adhesive has already been applied while the adhesive is being applied to another portion of the electrode. Thereby, the method according to the present disclosure may improve speed and efficiency of the manufacturing process.

The method may further comprise applying the adhesive to least a part of the first portion of the separator sheet (e.g. a surface thereof that the first electrode is to be arranged on) before arranging the first electrode thereon and/or applying the adhesive to least a part of the second portion of the separator sheet (e.g. a surface thereof that the second electrode is to be arranged on) before arranging the second electrode thereon. In some examples, the adhesive may be applied simultaneously to a portion of the separator sheet (for example the first or second portion, e.g. using the first and second adhesive applicator, respectively) and to an electrode arranged on another portion of the separator sheet (for example the second and first portion, respectively, e.g. using the other adhesive applicator, i.e. the second and first adhesive applicator, respectively). In one example, the adhesive maybe applied simultaneously to a portion of the separator sheet and to an electrode arranged on another portion of the separator sheet while at the same time folding the separator sheet to cover said electrode, e.g. with the former portion (i.e. the portion that adhesive is being applied to) of the separator sheet. This may for example be achieved by simultaneously moving the first and second adhesive applicators and the separator guide relative to the stacking table and/or vice-versa.

Additionally or alternatively, the method may comprise applying an adhesive to a (first) surface of the first electrode and/or a first surface of the second electrode, in particular prior to arranging the respective electrode on the first and second portion, respectively, of the separator sheet. Said first surface may face the first and second portion, respectively, of the separator sheet and may thus also be referred to as a bottom surface (or lower surface or region) of the respective electrode. The adhesive may for example be applied to the first surface of the respective electrode using a bottom-side applicator as described above.

The method may further comprise repeatedly executing some or all of the steps described above (e.g. arranging a first/second electrode, applying the adhesive and folding the separator sheet to cover the respective electrode), for example to stack a plurality of first and second electrodes on the stacking table with the separator sheet folded or interposed therebetween, e.g. in a zigzag shape (Z-type folding arrangement). In some examples, the method may further comprise arranging or integrating the electrode assembly in/into a battery cell, e.g. by housing the electrode assembly in a battery case with an electrolytic solution. This may comprise dissolving the adhesive in the electrolytic solution at least in part, e.g. by application of pressure and/or heat.

In some examples, the method comprises cutting a first electrode sheet unwound from a first electrode reel to form a plurality of first electrodes. In some examples, the step of arranging said first portion of the separator sheet may be or comprise seating a separator sheet unwound from a separator reel on a table along a separator guide. In some examples, the method may comprise applying an adhesive to a lower portion of the first electrode from a lower nozzle. In some examples, arranging the first electrode on said first portion of the separator sheet may be or comprise seating the first electrode on a first region of the separator sheet. In some examples, applying the adhesive to said first electrode and/or to said part of the second portion of said separator sheet may be or comprise applying an adhesive to an upper portion of the first electrode from a first upper nozzle. In some examples, folding the separator sheet to cover said first electrode may be or comprise folding the separator sheet in a folding direction guided by the separator guide, so that the second region of the separator sheet covers the first electrode.

The present disclosure further provides an electrode assembly for use in a battery (e.g. in a battery cell), in particular in a secondary battery (e.g. in a battery cell of or for use in a secondary battery). The electrode assembly comprises a plurality of first electrodes (e.g. cathodes or anodes) and a plurality of second electrodes (e.g. anodes and cathodes, respectively). The first and second electrodes are alternately stacked (e.g. a first electrode, then a second electrode, then another first electrode, then another second electrode and so on).

The first and second electrodes are separated from each other by a separator sheet that is folded between the first and second electrodes in a zigzag shape (Z-type folding). The separator sheet may be a single continuous sheet. The separator sheet may be folded such that each pair of adjacent electrodes (e.g. a first electrode and a second electrode arranged on the first electrode or vice-versa) are separated from each other by a respective portion of the separator sheet arranged or interposed therebetween.

An adhesive is arranged between the separator sheet and the first electrodes and/or between the separator sheet and the second electrodes. The adhesive may for example be arranged between a first electrode and a respective (first) portion of the separator sheet that said first electrode is arranged on and/or between said first electrode and a respective (second) portion of the separator sheet that covers said first electrode. Additionally or alternatively, the adhesive may for example be arranged between a second electrode and a respective (second) portion of the separator sheet that said second electrode is arranged on and/or between said second electrode and a respective (third) portion of the separator sheet that covers said second electrode.

Some or all of said adhesive may have been arranged between the separator sheet and the first and/or second electrodes by applying the adhesive to a surface of the respective electrode prior to arranging said surface on the separator sheet and/or covering said surface with the separator sheet (e.g. prior to establishing contact between said electrode and the separator sheet). This may for example manifest in a lower degree of penetration of the adhesive into the separator sheet (e.g. a smaller amount of adhesive penetrating into the separator sheet and/or the adhesive penetrating to a smaller depth into the separator sheet). For example, the adhesive may entirely or primarily be present on an (outer) surface of the separator sheet that is in contact with the respective electrode. This may improve an adhesive strength between the separator sheet and the respective electrodes.

In some examples, some or all of the adhesive may be arranged in a plurality of spots and/or lines. Put differently, the adhesive may not be applied uniformly between some or all of the electrodes and the corresponding portions of the separator sheet, but may be applied selectively in said plurality of spots (e.g. dots) and/or lines. The spots and/or lines may be separated from each other by portions or regions in which no adhesive is arranged. The spots and/or lines may be arranged in a regular pattern, e.g. in a regular grid (for example an equidistant and/or rectangular grid).

For some or all of the first and second electrodes, the adhesive may for example be arranged in between 2 and 50 lines, in some examples between 5 and 20 lines between a surface of the respective electrode and the separator sheet (e.g. a portion of the separator sheet that said electrode is arranged on or covered with). Additionally or alternatively, the adhesive may for example be arranged in between 2 and 1000 spots, in some examples between 10 and 200 spots between a surface of the respective electrode and the separator sheet (e.g. a portion of the separator sheet that said electrode is arranged on or covered with).

For some or all of the first and second electrodes, the adhesive may for example cover between 0.01% and 50%, particularly between 0.05% and 30%, or more particularly between 0.08% and 1% of a cross-sectional area of a contact surface between the respective electrode and the separator sheet (e.g. a portion of the separator sheet that said electrode is arranged on or covered with). Alternatively or additionally, the adhesive may for example occupy between 0.01% and 50%, particularly between 0.05% and 30%, or more particularly between 0.08% and 1% of a total area of the respective (adjacent) electrode.

In some examples, some or all of the adhesive may have been arranged between the separator sheet and the first and/or second electrodes by applying the adhesive to a first surface of the respective electrode prior to arranging said first surface on the separator sheet and by applying the adhesive to a second surface of the respective electrode opposite to the first surface prior to covering said second surface with a respective portion of the separator sheet. In some examples, no adhesive may have been applied to the separator sheet prior to arranging the first and/or second electrodes therebetween.

In some examples, some or all of the adhesive may have been arranged between the separator sheet and the first and/or second electrodes by applying the adhesive to a first surface of the respective electrode prior to arranging said first surface on a respective first portion of the separator sheet and to a respective second portion of the separator sheet prior to covering a second surface of the respective electrode opposite to the first surface with said second portion of the separator sheet. Additionally or alternatively, some or all of the adhesive may have been arranged between the separator sheet and the first and/or second electrodes by applying the adhesive to a respective first portion of the separator sheet prior to arranging a first surface of the respective electrode on said first portion of the separator sheet and to a second surface of the respective electrode opposite to the first surface prior to covering said second surface with a respective second portion of the separator sheet.

The adhesive may be configured to be dissolved in an electrolytic solution for use in a battery cell. For example, the adhesive may be configured to be dissolved partially or entirely when coming in contact with the electrolytic solution. The adhesive may be configured to be dissolved in the electrolytic solution by application of heat and/or pressure. The adhesive may for example dissolve at a temperature between 0 °C and 300 °C, in some examples between 10 °C and 250 °C, or between 20 °C and 200 °C, or particularly at 70 °C ± 30 °C. The adhesive may for example dissolve at or near an atmospheric pressure and/or at an increased pressure, such as at a pressure between 500 hPa and 4000 hPa, in some examples between 900 hPa and 3500 hPa, or particularly between 1000 hPa and 3000 hPa.

The adhesive may for example be or comprise an acrylate-based adhesive. Additionally or alternatively, the adhesive may for example be or comprise an acrylate-based adhesive or acrylate-containing adhesive, such as PMA or MMA.

The electrolytic solution may for example be or comprise a carbonate-based solvent, such as DMC, EC or EMC.

In some examples, the electrode assembly may be obtainable (e.g. manufactured) by a method of manufacturing an electrode assembly for use in a battery according to any one of the examples described herein.

The present disclosure further provides a battery cell comprising an electrode assembly according to any one of the examples described herein and a battery case housing the electrode assembly together with an electrolytic solution. In some examples, the adhesive may have been dissolved in the electrolytic solution at least in part or entirely. Some or all of the dissolved adhesive may remain in the electrolytic solution. In the electrode assembly, traces (e.g. non-dissolved leftovers) of the adhesive or at least traces (e.g. indications) of the application of the adhesive may remain between the separator sheet and the first and/or second electrodes (for example modifications to a surface of the separator sheet).

### ADVANTAGEOUS EFFECTS

According to examples, the present disclosure provides an electrode assembly and a battery cell in which electrodes and a separator sheet are stacked in a Z-folding type, and an adhesive is (or has previously been) applied to the upper portion and lower portion of the electrodes, thereby preventing the electrodes from being offset or displaced from a target position. According to examples, the present disclosure further provides an apparatus for manufacturing the same and a method for manufacturing the same.

The effects of the present disclosure are not limited to the effects mentioned above and additional other effects not described above will be clearly understood from the description of the appended claims by those skilled in the art.

### BRIEF DESCRIPTION OF THE DRAWINGS

Fig. 1 is a flowchart of a method for manufacturing an electrode assembly for use in a battery according to an example of the present disclosure;
Fig. 2 is a schematic diagram of an apparatus for manufacturing an electrode assembly for use in a battery according to an example of the present disclosure, which shows a state in which a first electrode is seated on a first region of the separator sheet;
Fig. 3 is a schematic diagram of an apparatus for manufacturing an electrode assembly for use in a battery according to an example of the present disclosure, which shows a state in which an adhesive is applied to a lower portion of a first electrode;
Fig. 4 is a schematic diagram of an apparatus for manufacturing an electrode assembly for use in a battery according to an example of the present disclosure, which shows a state in which an adhesive is applied to a lower portion of a first electrode;
Fig. 5 is a schematic diagram of an apparatus for manufacturing an electrode assembly for use in a battery according to an example of the present disclosure, which shows a state in which an adhesive is applied to an upper portion of the first electrode while a first upper nozzle linearly moves;
Fig. 6 is a schematic diagram of an apparatus for manufacturing an electrode assembly for use in a battery according to an example of the present disclosure, which shows a state in which a separator guide linearly moves and a second electrode is seated on a second region of the separator sheet;
Fig. 7 is a schematic diagram of an apparatus for manufacturing an electrode assembly for use in a battery according to an example of the present disclosure, which shows a state in which an adhesive is applied to an upper portion of the second electrode while a second upper nozzle linearly moves;
Fig. 8 is a cross-sectional view of an electrode assembly according to an example of the present disclosure; and
Fig. 9 is an exploded perspective view of a battery cell according to an example of the present disclosure.

### DETAILED DESCRIPTION OF THE EXAMPLES

Hereinafter, various examples of the present disclosure will be described in detail with reference to the accompanying drawings so that those skilled in the art can easily carry out them. The present disclosure may be modified in various different ways, and is not limited to the examples set forth herein.

Portions that are irrelevant to the description may be omitted to clearly describe the present disclosure, and like reference numerals may designate like elements throughout the description.

Further, in the drawings, the size and thickness of each element may be arbitrarily illustrated for convenience of description, and the present disclosure is not necessarily limited to those illustrated in the drawings. In the drawings, the thickness of layers, regions, etc. may be exaggerated for clarity. In the drawings, for convenience of description, the thicknesses of some layers and regions maybe exaggerated.

Further, throughout the description, when a portion is referred to as "including" or "comprising" a certain component, it means that the portion can further include other components, without excluding the other components, unless otherwise stated.

Hereinafter, a method of manufacturing an electrode assembly for use in a battery, namely a method for manufacturing a battery cell comprising said electrode assembly, according to examples of the present disclosure will be described.

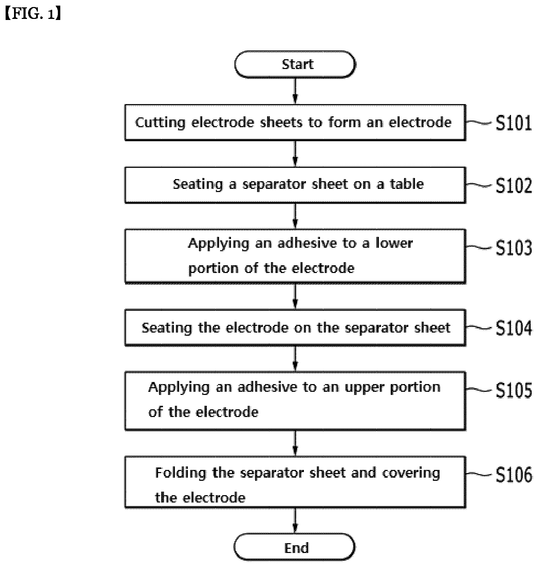

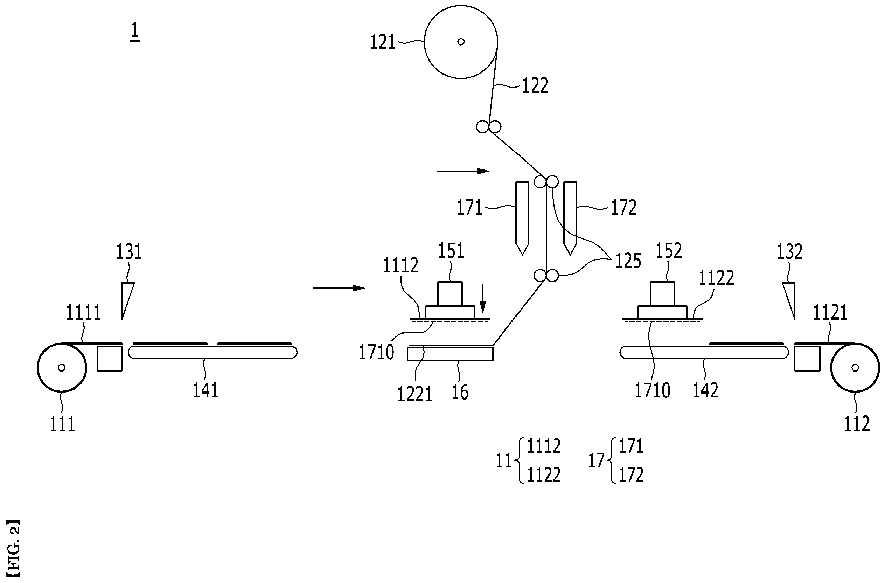

Fig. 1 is a flowchart of a method of manufacturing an electrode assembly for use in a battery, namely a method for manufacturing a battery cell comprising said electrode assembly, according to an example of the present disclosure. Fig. 2 is a schematic diagram of an apparatus 1 for manufacturing an electrode assembly for use in a battery according to an example of the present disclosure, which shows a state in which a first electrode is arranged (e.g. seated) on a first region (e.g. a first portion) of the separator sheet. Such an apparatus may for example be used for executing the method of Fig. 1 and is therefore used as a non-limiting example for illustration purposes in the following.

The apparatus 1 of Fig. 2 comprises an electrode supply unit, which in turn comprises a first electrode supply unit and a second electrode supply unit. In this example, the first electrode supply unit is (e.g. consists or is made up of) or comprises a first electrode reel 111, a first transfer device 141 and a first electrode placement device, namely a head (or header) 151. The second electrode supply unit is (e.g. consists or is made up of) or comprises a second electrode reel 111, a second transfer device 141 and a second electrode placement device, namely a head (or header) 151.

The apparatus 1 further comprises a separator supply unit, which in this example is or comprises a separator reel 121. The apparatus 1 also comprises a stacking table 16 (also referred to simply as table) and a separator guide 125. The apparatus 1 further comprises first and second adhesive applicators, which in this example each are or comprise a nozzle 171, 172 (also referred to as upper nozzles 171, 172 and collectively forming a pair of upper nozzles 17).

The apparatus 1 is configured for stacking first electrodes 1112 and second electrodes 1122 on the table 16 with a separator sheet 122 folded therebetween. The first and second electrodes 1112, 1122 may collectively be referred to as electrode(s) 11. Portions of the separator sheet 122 on which first electrodes 1112 are arranged (e.g. first, third, ... portions of the separator sheet 122) may collectively be referred to as first region 1221. Portions of the separator sheet 122 on which second electrodes 1122 are arranged (e.g. second, fourth, ... portions of the separator sheet 122) may collectively be referred to as second region 1222.

Referring to Figs. 1 and 2, a method for manufacturing a battery cell comprising an electrode assembly according to an example of the present disclosure includes a step of shaping (e.g. cutting) electrode sheets 1111 and 1121 to form an electrode 11 (e.g. a first electrode 1112 and/or a second electrode 1122) (S101); a step of arranging (e.g. seating) a separator sheet 122 on the table 16 (S102); a step of applying an adhesive to the lower portion (e.g. a first or bottom surface) of the electrode 11 (e.g. the first electrode 1112 and/or a second electrode 1122) (S103); a step of seating the electrode 11 (e.g. the first electrode 1112 and/or a second electrode 1122) on the separator sheet 122 (S104); a step of applying an adhesive on the electrode 11 (e.g. the first electrode 1112 and/or a second electrode 1122) (S105); and folding the separator sheet 122 and covering the electrode 11 (e.g. the first electrode and/or a second electrode 1122) (S106).

Therefore, the method for manufacturing a battery cell comprising an electrode assembly according to the present example applies an adhesive to the upper portion (e.g. a second or top surface opposite to the first surface) and lower portion of the electrode 11 (e.g. the first electrode 1112 and/or a second electrode 1122) when stacking the electrode 11 and the separator sheet 122 in a Z-folding type, thereby capable of preventing the electrode 11 (e.g. the first electrode 1112 and/or a second electrode 1122) from being offset or displaced from a target position (fixed position).

Hereinafter, each step shown in the flowchart of Fig. 1 will be specifically described with reference to Figs. 2 to 7 as a non-limiting example for illustration purposes.

The battery cell manufacturing apparatus 1 according to an example of the present disclosure includes electrode reels 111 and 112 on which an electrode sheet (e.g. having a plurality of electrodes 11 formed thereon or to be formed thereof) is unwound; a separator reel 121 in which a separator sheet 122 that is folded when the electrodes 11 are seated, covers the electrodes 11 and is stacked with the electrodes 11 is unwound; a table 16 on which the electrode 11 and the separator sheet 122 are seated on the upper surface; a separator guide 125 that guides a folding direction of the separator sheet 122; and a pair of upper nozzles 17 that apply an adhesive to at least a part of the upper portion of the electrode 11 seated on the table 16.

The electrode reels 111 and 112 may include a first electrode reel 111 on which a first electrode sheet 1111 (e.g. having a plurality of first electrodes 1112 formed thereon or to be formed thereof) is unwound; and a second electrode reel 112 on which the second electrode sheet 1121 (e.g. having a plurality of second electrodes 1122 formed thereon or to be formed thereof) is unwound.

The electrode reels 111 and 112 are reels on which the electrode sheets 1111 and 1121 are wound, and the electrode sheets 1111 and 1121 are unwound from the electrode reels 111 and 112.

Then, the electrode sheets 1111 and 1121 are cut to form the electrodes 11. More specifically, according to the present example, the first electrode reel 111 is a reel on which the first electrode sheet 1111 is wound, and the first electrode sheet 1111 is unwound from the first electrode reel 111. Further, the second electrode reel 112 is a reel on which the second electrode sheet 1121 is wound, and the second electrode sheet 1121 is unwound from the second electrode reel 112.

Here, the electrode sheets 1111 and 1121 can be manufactured by applying a slurry of an electrode active material, a conductive material, and a binder onto an electrode current collector, and then drying and pressing the slurry. However, the method for manufacturing the electrode sheets 1111 and 1121 is not limited thereto, and any suitable method for manufacturing the electrode sheets 1111 and 1121 and/or the electrodes 1112, 1122 known in the art can be used for manufacturing the electrode sheets 1111, 1121 and the electrodes 1112, 1122, respectively.

More specifically, the first electrode sheet 1111 and the second electrode sheet 1121 may include electrode active materials having different polarities from each other. That is, the first electrode 1112 and the second electrode 1122 may be electrodes 11 having different polarities from each other. As an example, if the first electrode 1112 is a cathode, the second electrode 1122 may be an anode. As another example, if the first electrode 1112 is an anode, the second electrode 1122 may be a cathode.

The separator reel 121 is a reel on which the separator sheet 122 is wound, and the separator sheet 122 is unwound from the separator reel 121. After that, the separator sheet 122 is stacked with the electrodes 11 formed by cutting the electrode sheets 1111 and 1121. Here, the electrode 11 and the separator sheet 122 are stacked in a Z-folding type. More specifically, in the present example, when the first electrode 1112 is seated on the separator sheet 122, one side is folded to cover the first electrode 1112, and when the second electrode 1122 is seated, the other side is folded to cover the second electrode 1122. The separator sheet 122 may thus assume or take a zigzag or meandering shape.

The table 16 may be configured such that the electrode 11 and the separator sheet 122 can be seated and stacked on the upper surface. More preferably, the upper surface of the table 16 is formed substantially flat, so that the electrode 11 and the separator sheet 122 can be stably stacked. The table 16 maybe arranged between the first and second electrode supply units, in particular between the first electrode reel 111 and the second electrode reel 112. More specifically, the table 16 may be fixed (e.g. permanently fixed such that it cannot move) between the first electrode reel 111 and the second electrode reel 112.

Thereby, the table 16 is configured such that the electrode 11 and the separator sheet 122 can be stacked on the table 16 in a fixed state (e.g. with the table 16 not moving), and thus, the alignment degree of the electrode 11 and the separator sheet 122 can be further improved. In other examples, the table 16 may also be movable, for example back and forth along a first direction (e.g. linearly reciprocating) between the first and second electrode reels 111, 112.

The battery cell manufacturing apparatus 1 according to the present example may further include a first transfer device 141 that transfers the first electrode 1112 toward the table 16; and a second transfer device 142 that transfers the second electrode 1122 towards the table 16. Here, the first transfer device 141 may transfer the first electrode 1112, which is formed by cutting the first electrode sheet 1111 unwound from the first electrode reel 111, toward the table 16. Further, the second transfer device 142 may transfer the second electrode 1122, which is formed by cutting the second electrode sheet 1121 unwound from the second electrode reel 112, toward the table 16.

Thereby, in the present example, the first electrode 1112 and the second electrode 1122 can be respectively transferred to both sides of the table 16 through the first transfer device 141 and the second transfer device 142, which may make it easy to alternately stack the first electrode 1112 and the second electrode 1122 on the separator sheet 122.

The battery cell manufacturing apparatus 1 according to the present example may include heads (or headers) 151 and 152 that adsorb the electrode 11 and seat it on the separator sheet 122. More specifically, the heads 151 and 152 may further include a first head (or header) 151 that adsorbs the first electrode 1112 and seats it on the separator sheet 122, and a second head (or header) 152 that adsorbs the second electrode 1122 and seats it on the separator sheet 122. Here, the first head 151 and the second head 152 each can move toward the table 16, for example move back and forth along the first direction (e.g. linearly reciprocate) toward the table 16. The heads 151, 152 may be examples of an electrode placement device, in particular an electrode placement head according to the present disclosure.

More specifically, the first head 151 may pick up and hold (e.g. adsorb and/or grab) the first electrode 1112 transferred from the first transfer device 141 toward the table 16, and the second head 152 may pick up and hold (e.g. adsorb and/or grab) the second electrode 1122 transferred from the second transfer device 142 toward the table 16. Further, the first head 151 and the second head 152 may linearly move toward the table 16.

Thereby, in the present example, the first head 151 and the second head 152 can move the electrode 11 upward of the table 16 (e.g. facing the table 16), and can stably seat the electrode 11 on the separator sheet 122.

Further, the heads 151 and 152 may measure whether or not the first electrode 1112 or the second electrode 1122 is misaligned for each of first electrode 1112 or second electrode 1122, and may then correct the position as necessary, thereby being able to precisely seat at a desired position (target position) on the separator sheet 122 located on the table 16. Thereby, in the present example, the alignment degree between the electrode 11 and the separator sheet 122 stacked on the table 16 may be further improved.

Referring to Fig. 2, in the battery cell manufacturing apparatus 1 according to the present example, the electrode 11 may be seated on the separator sheet 122 in a state where an adhesive is applied (has been applied) to at least a part of the lower portion (e.g. a first or bottom surface) of the electrode 11. More specifically, in the present example, an adhesive may be applied to at least a part of the lower portion of the electrode 11 when located on the transfer devices 141 and 142, or an adhesive may be applied to at least a part of the lower portion of the electrode 11 when adsorbed to the heads 151 and 152.

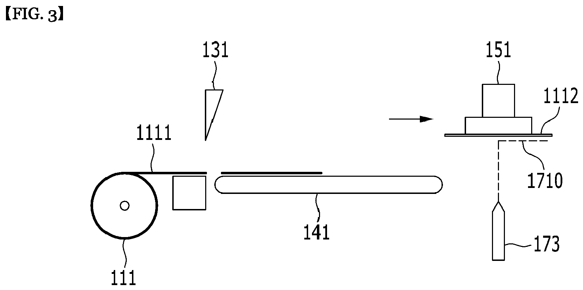

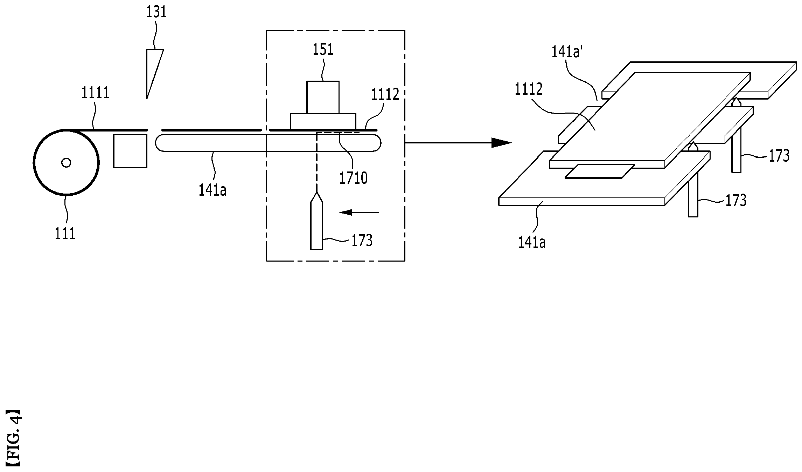

Fig. 3 is a schematic diagram of the apparatus 1 for manufacturing an electrode assembly according to an example of the present disclosure, which shows a state in which an adhesive is applied to a lower portion of a first electrode. Fig. 4 is a schematic diagram of the apparatus 1 for manufacturing an electrode assembly according to another example of the present disclosure, which shows a state in which an adhesive is applied to a lower portion of a first electrode.

Referring to Figs. 3 and 4, the battery cell manufacturing apparatus 1 according to the present example may include a bottom-side applicator, which may e.g. be or comprise a nozzle 173 (also referred to as a lower nozzle 173) that applies an adhesive to at least a part of a lower portion of the first electrode 1112. More specifically, the lower nozzle 173 may apply an adhesive to at least a part of the lower (or bottom) surface of the first electrode 1112. Thereby, a first adhesive layer 1710 may be formed on the lower surface of the first electrode 1112.

In one example, referring to Fig. 3, when the first electrode 1112 is held by (e.g. adsorbed to) the first head 151, the lower nozzle 173 may apply an adhesive to at least a part of the lower portion of the first electrode.

In another example, referring to Fig. 4, the first transfer device 141a includes a first opening, e.g. a first slit (or groove) 141a' that is opened toward the first electrode 1112, and thus, the lower nozzle 173 can apply an adhesive to at least a part of the lower portion of the first electrode 1112 through the first slit 141a'.

Here, the first transfer device 141a may be configured such that at least one first slit 141a' (e.g. a plurality of first slits) is formed. The plurality of first slits 141a' may be arranged to be spaced apart from each other. Further, as shown in Fig. 4, the first slit(s) 141a' may be extended along the width direction of the first electrode 1112 (e.g. perpendicular to a transfer direction of the first transfer device 141a as illustrated in Fig. 4), but is not limited thereto and can be extended in various directions. The first slit(s) 141a maybe arranged in and/or extend through a transfer surface of the first transfer device 141a, e.g. a surface that the first electrode 1112 is transferred on or along as illustrated in Fig. 4.

Here, the first electrode 1112 is described as an example for convenience of explanation. The second head 152 and/or the second transfer device 142 for the second electrode 1122 may be embodied in the same way or in a similar way.

Thereby, the battery cell manufacturing apparatus 1 according to the present example can apply an adhesive to at least a part of the lower portion of the electrode 11 in the process of transferring the electrode 11, which is thus advantageous in that the convenience and speed of the process can be improved.

The adhesive may be uniformly applied to the lower portion of the electrode 11. However, when the adhesive is completely applied to the entire surface of the lower portion of the electrode 11, the amount of the adhesive applied may be excessively large. In such a case, the adhesive may flow to the outside of the separator sheet 122 to contaminate other portions, and when the secondary battery is manufactured, the function of generating power may not be smooth.

Therefore, in the present example, it may be preferable that the adhesive is applied to the lower portion of the electrode 11 selectively (e.g. locally only), e.g. by a spot application method of applying in a spot (e.g. as a plurality of spots) and/or a line application method of applying in a line (e.g. as a plurality of lines). That is, the first adhesive layer 1710 may be preferably formed in a spot pattern and/or a line pattern.

If, in contrast, the amount of the adhesive applied is too small, the electrode 11 may not be or remain fixed to the separator sheet 122 while the cell moves, and can be offset or displaced from a target position. Therefore, it may be preferable that the interval between the regions to which the adhesive is applied is not excessively wide.

Further, the adhesive is applied to the surface of the electrode 11, and can be applied in a minimum amount that can secure the adhesive force between the electrode 11 and the separator sheet 122. When, in contrast, the adhesive is applied directly onto the separator sheet 122, the separator sheet 122 may absorb a part of the adhesive, which may cause a problem that a larger amount of adhesive must be applied in order to secure the adhesive force between the electrode 11 and the separator sheet 122.

The adhesive may be dissolved in an electrolytic solution, in particular the electrolytic solution that the electrode assembly is housed with in the battery cell. More specifically, when the first adhesive layer 1710 formed in the lower portion of the electrode 11 is impregnated with an electrolytic solution, the adhesive contained in the first adhesive layer 1710 may be dissolved in the electrolytic solution. Here, the adhesive being dissolved may mean that the adhesive is dissolved into the electrolytic solution. That is, it may mean that the region of the first adhesive layer 1710 formed in the lower portion of the electrode 11 is reduced (e.g. dissolved partially), or the first adhesive layer 1710 is completely eliminated (or dissolved), so that the first adhesive layer 1710 does not remain in the lower portion of the electrode 11.

In one example, the adhesive may be an acrylate-based adhesive. Thereby, in the present example, as the acrylate-based adhesive is applied as the adhesive to the lower portion of the electrode 11, the adhesive maybe dissolved into the electrolytic solution contained in the final battery cell.

Thereby, in the present example, the first adhesive layer 1710 can fix the electrode 11 to the separator sheet 122 in the manufacturing process to prevent the separation from a fixed position. In addition, the first adhesive layer 1710 maybe dissolved in the electrolytic solution contained in the final battery cell, and thus may not hinder the movement of lithium ions between the electrode and the separator, and can further improve the battery cell performance.

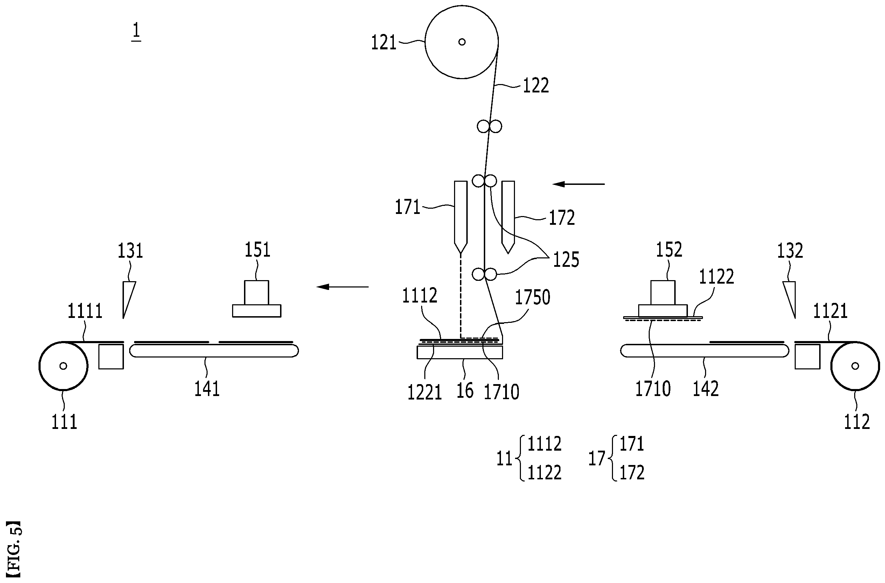

Fig. 5 is a schematic diagram of the apparatus 1 for manufacturing an electrode assembly for use in a battery according to an example of the present disclosure, which shows a state in which an adhesive is applied to an upper portion (e.g. a second or top surface opposite to the first surface) of the first electrode while a first upper nozzle linearly moves.

Referring to Fig. 5, the pair of upper nozzles 17 apply an adhesive to at least a part of the upper portion of the electrode 11. More specifically, the pair of upper nozzles 17 include a first upper nozzle 171 that applies an adhesive to at least a part of an upper portion of the first electrode 1112, and a second upper nozzle 172 that applies an adhesive to at least a part of an upper portion of the second electrode 1122.

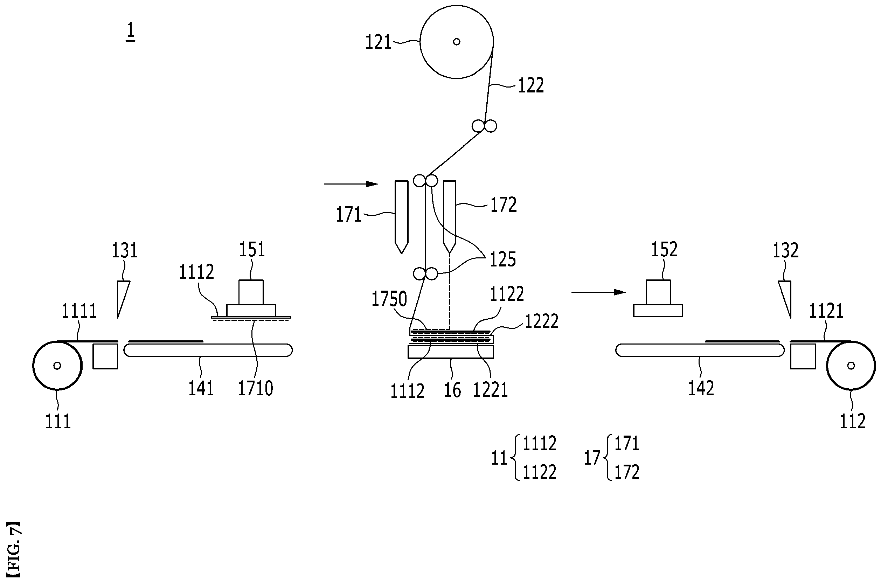

Further, the first upper nozzle 171 and the second upper nozzle 172 may be arranged on both sides with the separator sheet 122 being interposed therebetween. That is, before the separator sheet 122 covers the upper portion of the first electrode 1112, the first upper nozzle 171 may apply an adhesive to at least a part of an upper portion of the first electrode 1112 to form a second adhesive layer 1750. Further, as described later in Fig. 7, before the separator sheet 122 covers the upper portion of the second electrode 1122, the second upper nozzle 172 may apply an adhesive to at least a part of an upper portion of the second electrode 1122 to form a second adhesive layer 1750.

Further, the pair of upper nozzles 17 may move back and forth relative to the table 16 along a first direction (e.g. along a horizontal direction in Fig. 5 as illustrated by the horizontal arrows). Put differently, the pair of upper nozzles 17 may linearly reciprocate left and right on the basis of (relative to) the table 16 (e.g. along a straight line). That is, the pair of upper nozzles 17 may apply an adhesive to at least a part of the upper portion of the electrode 11 while linearly moving in the direction toward from one side to the other side of the table 16 or in the opposite direction thereof.

Further, the details of the application of the adhesive by the pair of upper nozzles 17 may be similar to the application of the adhesive by the lower nozzle 173 described above.

Here, the pair of upper nozzles 17 may move (e.g. reciprocate left and right) simultaneously or individually (e.g. separately) on the basis of (relative to) the table 16. More preferably, the pair of upper nozzles 17 can reciprocate left and right at the same time on the basis of the table 16. As an example, when (e.g. after and/or simultaneously with a least in part) the first upper nozzle 171 applies an adhesive from one side to the other side of the table 16 as shown in Fig. 5, the second upper nozzle 172 may apply an adhesive from the other side to the one side of the table 16, as will be described later in Fig. 7.

Thereby, in the present example, the process time of the adhesive application process of the pair of upper nozzles 17 can be reduced, and the process efficiency can be further improved. Additionally, the adhesive application process of the pair of upper nozzles 17 can be performed simultaneously with the process of folding the separator sheet 122, so that process efficiency can be further improved.

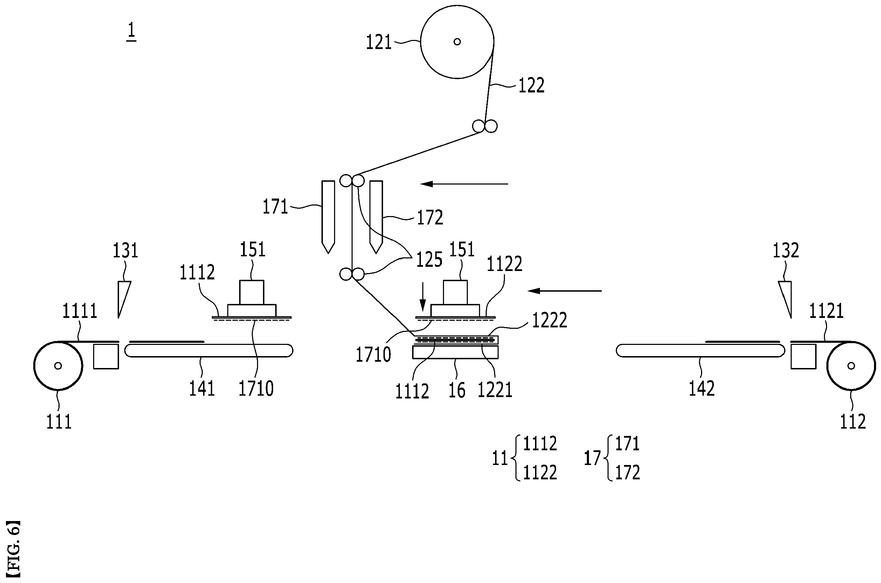

Fig. 6 is a schematic diagram of the apparatus 1 for manufacturing an electrode assembly for use in a battery according to an example of the present disclosure, which shows a state in which a separator guide linearly moves and a second electrode is seated on a second region of the separator sheet.

Referring to Figs. 5 and 6, in the present example, the separator guide 125 can guide the folding of the separator sheet, e.g. a folding direction of the separator sheet 122 can be guided by the separator guide 125. More specifically, the separator guide 125 can move back and forth relative to the table 16 (e.g. linearly reciprocate left and right on the basis of the table 16), for example along the first direction.

In one example, the separator guide 125 may comprise a pair of rollers or rolls (guiding rollers). The separator guide may for example have a shape in which a pair of rollers are horizontally arranged (e.g. at a same height above the table 16). The separator sheet 122 may be inserted between the pair of rollers. However, the shape of the separator guide 125 is not limited thereto, and may be different than in the present example, e.g. as long as it is a shape capable of controlling the folding direction of the separator sheet 122.

The separator guide 125 maybe located individually at the upper and lower portions on the basis of the pair of upper nozzles 17. For example, the separator guide 125 may comprise a first pair of rollers adjacent to or below a lower or bottom portion of the pair of upper nozzles 17 (e.g. between the pair of upper nozzles 17 and the table 16) and a second pair of rollers adjacent to or above an upper or top portion of the pair of upper nozzles 17 as shown in Figs. 5 to 7. However, the position and number of the separator guides 125 (e.g. rollers) are not limited thereto, and may be different than in the present example, e.g. as long as it is a position and number capable of controlling the folding direction of the separator sheet 122.

Here, when the separator guide 125 linearly reciprocates (e.g. moves along the first direction) toward the first transfer device 141 and the second transfer device 142 on the basis of (relative to) the table 16, the separator sheet 122 is folded along the moving direction of the separator guide 125, so that the separator sheet 122 can cover the electrode 11.

In one example, referring to Figs. 5 and 6, in a state where the first electrode 1112 is seated on the first region 1221 (e.g. a first portion) of the separator sheet 122, the separator guide 125 linearly moves toward the first transfer device 141 so that the second region 1222 (e.g. a second portion) of the separator sheet 122 can cover the upper portion of the first electrode 1112.

Here, the first region 1221 of the separator sheet 122 refers to a region in the separator sheet 122 to which the first electrode 1112 is attached. In some cases, the first region 1221 refers to a region in the separator sheet 122 to which the first electrode 1112 is attached while covering the second electrode 1122 (e.g. the first region 1221 or the first portion thereof may be arranged above a respective second electrode 1122 and below a respective first electrode 1112 in the final electrode assembly). Further, the second region 1222 refers to a region in the separator sheet 122 to which the second electrode 1122 is attached while covering the first electrode 1112 (e.g. the second region 1221 or the second portion thereof may be arranged above a respective first electrode 1112 and below a respective second electrode 1112 in the final electrode assembly). In other words, the first electrode 1112 is seated on the first region 1221 (e.g. on the first portion) of the separator sheet 122, and the second electrode 1122 may be seated on the second region 1222 (e.g. on the second portion) of the separator sheet 122.

Further, the separator guide 125 may simultaneously move relative to the table 16 along the first direction (e.g. reciprocate left and right on the basis of the table 16) together with a pair of upper nozzles 17, or the separator guide 125 and the pair of upper nozzles 17 may move individually (e.g. separately), e.g. reciprocate left and right individually.

That is, in the present example, when (e.g. simultaneously at least in part) the first upper nozzle 171 applies the adhesive to at least a part of the upper portion of the first electrode 1112 as shown in Figs. 5 and 6, the separator guide 125 linearly moves in a direction in which the separator sheet 122 covers the first electrode 1112 (e.g. towards the first electrode supply unit, the first transfer device 141 and/or the first electrode reel 111). Further, as will be described later in Fig. 7, when (e.g. simultaneously at least in part) the second upper nozzle 172 applies the adhesive to at least a part of the upper portion of the second electrode 1122, the separator guide 125 may linearly move in a direction in which the separator sheet 122 covers the second electrode 1122 (e.g. towards the second electrode supply unit and/or the second electrode reel 112).

Thereby, the separator guide 125 may allow the separator sheet 122 to cover the upper and lower portions of the electrode 11 in a Z-folding type (i.e. guide the folding of the separator sheet 122).

More preferably, the separator guide 125 and the pair of upper nozzles 17 may simultaneously reciprocate left and right on the basis of the table 16. In one example, when the first upper nozzle 171 applies an adhesive from one side to the other side of the table 16 (e.g. across the top surface of the first electrode 1112) as shown in Figs. 5 and 6, the separator guide 125 may also move linearly from one side to the other side of the table 16 (e.g. towards the first electrode supply unit) to fold the separator sheet 122.

Thereby, the folding process of the separator sheet 122 by the separator guide 125 may be performed simultaneously with the adhesive application process of the pair of upper nozzles 17, so that the process time can be reduced, and the process efficiency can be further improved.

Fig. 7 is a schematic diagram of the apparatus 1 for manufacturing an electrode assembly for use in a battery according to an example of the present disclosure, which shows a state in which an adhesive is applied to an upper portion (e.g. a top surface) of the second electrode while a second upper nozzle linearly moves.

Referring to Figs. 2, 6 and 7, in the battery cell manufacturing apparatus 1 according to the present example, the second electrode 1122 can be adsorbed to the second head 152 to perform linear reciprocating motion (e.g. move along the first direction towards the table 16), similarly to the first electrode 1112. As an example, as shown in Fig. 6, in a state where the second electrode 1122 is adsorbed to the second head 152, the second head 152 can be linearly moved so as to be located at (e.g. above and/or facing) the upper portion of the table 16. At this time, the second electrode 1122 may be seated on the second region 1222 of the separator sheet 122. In addition, the details of the second electrode 1122 and the second head 152 may be similar to the first electrode 1112 and the first head 151 described above.

Further, similarly to the first upper nozzle 171, the second upper nozzle 172 may move relative to the table 16 along the first direction, e.g. perform linear reciprocating motion on the basis of the table 16. In one example, as the second upper nozzle 172 moves from one side to the other side of the table 16 (e.g. towards the second electrode supply unit, the second transfer device 142 and/or the second electrode reel 112), an adhesive may be applied to at least a part of the upper portion of the second electrode 1122. In addition, the details of the second upper nozzle 172 can be similar to the first upper nozzle 171 described above.

The electrode assembly manufacturing method according to an example of the present disclosure using the manufacturing apparatus 1 can be performed as follows (e.g. for manufacturing a unit cell for an electrode assembly).

First, referring to Figs. 1 and 2, when the first electrode sheet 1111 is unwound from the first electrode reel 111, the first cutter 131 cuts the first electrode sheet 1111 to form a plurality of first electrodes 1112 (S101).

Meanwhile, when the separator sheet 122 is unwound from the separator reel 121, it is arranged (e.g. seated) on the upper surface of the table 16 (S102).

Further, the lower nozzle 173 (bottom-side applicator) applies an adhesive to the lower portion (e.g. a bottom surface) of the first electrode 1112 (S103). In one example, as shown in Fig. 3, in a state where the first head 151 holds (e.g. adsorbs) the first electrode 1112, the lower nozzle applies an adhesive to the lower portion of the first electrode 1112. In another example, as shown in Fig. 4, the lower nozzle 173 applies the adhesive to the lower portion of the first electrode 1112 while the first transfer device 141 transfers the first electrode 1112.

Further, referring to Figs. 1 and 2, the first head 151 may linearly move on (e.g. towards) the table 16 in a state of adsorbing the first electrode 1112. And, when the first head 151 is located above the table 16, as shown in Fig. 2, the first head 151 seats the first electrode 1112 on which the first adhesive layer 1710 is formed on the first region 1221 of the separator sheet 122 (S104).

Further, referring to Figs. 1 and 5, when the first electrode 1112 is seated on the first region 1221 (e.g. the first portion) of the separator sheet 122, the first upper nozzle 171 may apply an adhesive to the upper portion (e.g. a top surface) of the first electrode 1112 (S105). Here, as the first upper nozzle 171 moves toward the first electrode supply unit (e.g. toward the first transfer device 141), the second adhesive layer 1750 may be formed on the first electrode 1112.

Further, referring to Figs. 1 and 6, in a state where at least a part of the second adhesive layer 1750 is formed on the first electrode 1112, the separator guide 125 moves in the same direction as the moving direction of the first upper nozzle 171, and one side of the separator sheet 122 is folded, so that the second region 1222 (e.g. the second portion) of the separator sheet 122 covers the first electrode 1112 (S106).

Meanwhile, as shown in Fig. 2, when the second electrode sheet 1121 is unwound from the second electrode reel 112, the second cutter 132 cuts the second electrode sheet 1121. Then, a plurality of second electrodes 1122 are formed. When the second transfer device 142 transfers the second electrode 1122, the second head 152 holds (e.g. adsorbs) the second electrode 1122. Here, similarly to the first electrode 1112, a first adhesive layer 1710 formed by applying an adhesive from the lower nozzle 173 may be located at the lower portion (e.g. a bottom surface) of the second electrode 1122.

And, as shown in Fig. 6, when the second region 1222 of the separator sheet 122 covers the first electrode 1112, the second head 152 adsorbing the second electrode 1122 moves toward the upper portion of the second region 1222 to seat the second electrode 1122 on the upper portion of the second region 1222.

And, as shown in Fig. 7, the second upper nozzle 172 applies an adhesive to the upper portion of the second electrode 1122. Here, as the second upper nozzle 172 moves toward the second electrode supply unit (e.g. toward the second transfer device 142), a second adhesive layer 1750 may be formed on the second electrode 1122 (e.g. on a top surface thereof).

Then, in a state where at least a part of the second adhesive layer 1750 is formed on the second electrode 1122, the separator guide 125 moves in the same direction as the moving direction of the second upper nozzle 172, and the other side of the separator sheet 122 is folded, so that the first region 1221 (e.g. the third portion) of the separator sheet 122 covers the second electrode 1122.

By repeating the above processes, the electrode assembly manufacturing method according to an example of the present disclosure can be performed, e.g. to sequentially form a plurality of unit cells of the electrode assembly.

When such an electrode assembly manufacturing method according to the examples of the present disclosure is performed, the adhesives are respectively applied to the upper and lower portions (e.g. bottom and top surfaces) of the electrode 11 at the time of stacking the electrode 11 and the separator sheet 122 in a Z-folding type, thereby capable of preventing the electrode 11 from being offset or displaced from a target position.

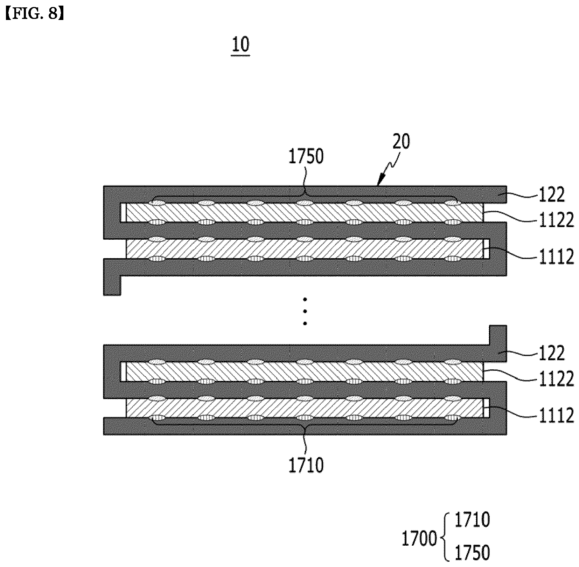

Fig. 8 is a cross-sectional view of an electrode assembly according to an example of the present disclosure.

Referring to Figs. 7 and 8, in the electrode assembly 10 in which electrodes and a separator sheet are alternately stacked according to an example of the present disclosure, the electrodes 11 include a first electrode 1112 and a second electrode 1122, and the separator sheet 122 has a zigzag shape formed by being folded at least twice.

Here, the separator sheet 122 is folded in a state where the first electrode 1112 is seated on the first region 1221 (e.g. the first portion) of the separator sheet 122, so that the second region 1222 (e.g. the second portion) of the separator 122 covers the first electrode 1112. Further, the separator sheet 122 is folded in a state where the second electrode 1122 is seated on the second region 1222 (e.g. the second portion) of the separator sheet 122, so that the first region 1221 (e.g. the third portion) of the separator sheet 122 covers the second electrode 1122.

In particular, the electrode assembly 10 according to the present example may be configured such that the electrodes 11 are stacked one by one on the first region 1221 (e.g. the first, third, ... portion) or the second region 1222 (e.g. the second, fourth, ... portion) of the separator sheet 122. At this time, after measuring the presence or absence of misalignment, the electrodes 11 can be stacked at an accurate position on the separator sheet 122 in a state where the position is corrected if necessary. Thereby, the electrode assembly 10 according to the present example can be further improved in the alignment degree between the electrode 11 and the separator sheet 122.

Here, an adhesive layer 1700 is formed between the electrodes 11 and the separator sheet 122 (i.e. an adhesive is arranged between the separator sheet 122 and the first and/or second electrodes 1112, 1122). More specifically, the adhesive layer 1700 includes a first adhesive layer 1710 and a second adhesive layer 1750. The first adhesive layer 1710 may be located between the lower portion (e.g. bottom surfaces) of the electrodes 11 and the separator sheet 122, and the second adhesive layer 1750 may be located between the upper portion (e.g. top surfaces) of the electrodes 11 and the separator sheet 122.

In one example, the first adhesive layer 1710 and the second adhesive layer 1750 may be formed by applying (e.g. arranging) an adhesive in the form of a plurality of spots (e.g. dots), respectively. However, as described above in the electrode assembly manufacturing apparatus 1, the shapes of the first adhesive layer 1710 and the second adhesive layer 1750 are not limited thereto, and maybe formed in various shapes. For example, the first adhesive layer 1710 and/or the second adhesive layer 1750 may additionally or alternatively be formed by applying (e.g. arranging) the adhesive in the form of a plurality of lines (e.g. lines extending along a width or a length of the electrodes 11, for example in the direction of view of Fig. 8).

In specific examples, the first adhesive layer 1710 may be formed such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the first adhesive layer 1710 may be formed so as to occupy 0.01% to 50%, particularly 0.05% to 30%, and more particularly 0.08% to 1% of a total area of the electrode 1112 in a plan view (normal to the electrode 1112).

In specific examples, the second adhesive layer 1750 may be formed such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the second adhesive layer 1750 may be formed so as to occupy 0.01% to 50%, particularly 0.05% to 30%, and more particularly 0.08% to 1% of a total area of the electrode 1122 in a plan view (normal to the electrode 1122).

Thereby, the electrode assembly 10 according to the present example forms an adhesive layer 1700 between the electrodes 11 and the separator sheet 122, and thus even in the case of a low-cost separator whose adhesive strength is low, the electrodes 11 and the separator can be stably fixed to each other, thereby capable of preventing the electrodes 11 from being offset or displaced from a target position. In addition, the electrode assembly 10 of the present example covers the upper and lower portions of the electrode 11 in a shape in which a separator sheet 122 is folded, so that the alignment degree of the electrode 11 and the efficiency of the process can be further improved.

Further, since there is no need to perform a laminating process as in the conventional case, it is possible to reduce the defective rate in the process caused by heat and pressure. And, since the laminator can be removed, the volume of the manufacturing apparatus can be reduced and the manufacturing process can be simplified.

The separator sheet 122 (separator) may for example comprise or consist of a flexible and electrically insulating material, in particular a porous, flexible and electrically insulating material, e.g. a resin film such as a polyolefin-based resin film.

The separator according to the example described herein may be a CCS (Ceramic Coated Separator. Generally, the separator may have a raw film and a coating layer formed on at least one surface of the raw film, wherein the coating layer may include alumina powder and a binder for aggregating them. SRS (Safety Reinforced Separator) has a large amount of binder coated on the surface of the coating layer, but CCS may not have the binder coated on the surface of the coating layer, or may have a much lower surface binder content as compared with SRS. For example, e.g. in the case of the CCS separator according to the present example, the content of the binder coated on the surface of the coating layer of the separator may be about 3 wt% or less, in some examples about 2 wt% or less, in one example about 1 wt% or less.

When the separator is CCS, the internal electrode contained in the electrode assembly may be transferred in an unfixed state, and thus alignment may be disturbed during transfer. Of course, when the separator is CCS, it can be fixed with heat and pressure, but the alignment of the internal electrodes may be disturbed even in the process of transferring to the fixing device for heat and pressure after forming the stacked body of the electrode and the separator. Further, there is a disadvantage in that an expensive separator having a high binder content must be used in order to attach the electrode and the separator by heat and pressure. On the contrary, according to the present example, it is possible to increase the fixing force while preventing the alignment of the internal electrodes from being disturbed during transfer.

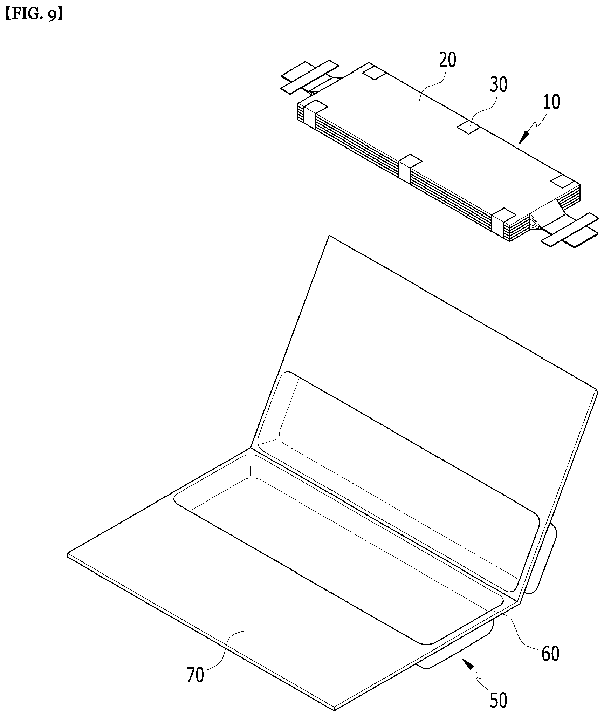

Fig. 9 is an exploded perspective view of a battery cell according to an example of the present disclosure.

Referring to Figs. 2, 8 and 9, a battery cell according to an example of the present disclosure is a battery cell including the electrode assembly 10 described above, wherein the battery cell includes a battery case 50 for housing the electrode assembly 10 together with an electrolytic solution. The adhesive layer 1700 maybe dissolved (e.g. partially or entirely) in the electrolytic solution, e.g. by application of heat and/or pressure.

Here, a fixing member such as a fixing tape 30 may be attached to the outside of the electrode assembly 10. Therefore, the stacked alignment state of the electrode 11 and the separator sheet 122 can be maintained. The electrode assembly 10 to which the fixing tape 30 is attached may be referred to as a final electrode assembly 20.

The battery case 50 includes an electrode assembly 10 and a receiving part 60 to which the final electrode assembly 20 is mounted, and a sealing part 70 for sealing the outer periphery of the receiving part 60. In one example, the battery case 50 may be a laminated sheet including a resin layer and a metal layer. More specifically, the battery case 50 may be made of a laminated sheet, and may include an outer resin layer for forming the outermost shell, a blocking metal layer for preventing the penetration of a material, and an inner resin layer for sealing.

Further, the receiving part 60 of the battery case 50 may be configured to house an electrolytic solution together with the electrode assembly 10. Here, the adhesive layer 1700 contained in the electrode assembly 10 may be dissolved into the electrolytic solution. In particular, in the battery cell according to the present example, in an activation step such as a formation step, the adhesive layer 1700 contained in the electrode assembly 10 may be dissolved into an electrolytic solution under high temperature and/or pressure conditions.

More specifically, in the battery cell according to the present example, when the adhesive layer 1700 formed between the electrode 11 of the electrode assembly 10 and the separator sheet 122 is dissolved into the electrolytic solution, the adhesive 14 may hardly remain on the surface of the electrode 11 (e.g. may be dissolved entirely or almost entirely), or may not be completely eliminated (e.g. may only be dissolved partially).

The separator sheet 122 may generally be a porous sheet. In this regard, a part of the adhesive 14 may be permeated into the separator sheet 122. However, even in the case of the adhesive layer 1700 penetrated into the separator sheet 122, it maybe mostly dissolved in the electrolytic solution, or may be completely dissolved. In this process, traces of application of the adhesive layer 1700 may remain on the separator sheet 122.

Here, the application trace of the adhesive layer 1700 means that the adhesive component contained in the adhesive layer 1700 does not remain, but a part of the outer surface of the separator sheet 122 is deformed and/or modified by the adhesive layer 1700. However, the present disclosure is not limited thereto, and the application trace of the adhesive layer 1700 may mean traces that can confirm the application or (former) presence of the adhesive in various ways, like traces that can confirm with the naked eye the application of the adhesive. Thereby, the application trace of the adhesive layer 1700 formed on the separator sheet 122 may be formed at the same position as the position where the adhesive is applied (e.g. in a plurality of spots and/or lines).

Therefore, the battery cell according to the present example can prevent the performance degradation and realize excellent battery performance because the adhesive layer 1700 is partially or completely dissolved on the surface of the electrode 11 or the separator 122, and the unreacted region due to the adhesive layer 1700 disappears.

In view of the above, it will be appreciated that the present disclosure also relates to the following examples:
According to an example of the present disclosure, there is provided an apparatus for manufacturing a battery cell, the apparatus comprising: an electrode reel (e.g. as part of or an example of an electrode supply unit) on which an electrode sheet having a plurality of electrodes formed thereon is unwound; a separator reel (e.g. as part of or an example of a separator supply unit) in which a separator sheet that is folded when the electrodes are seated, covers the electrodes and is stacked with the electrodes is unwound; a table (e.g. as part of or an example of a stacking table) on which the electrode and the separator sheet are seated on the upper surface; a separator guide that guides a folding direction of the separator sheet; and a pair of upper nozzles (e.g. as part of or an example of a first and/or second adhesive applicator) that apply an adhesive to at least a part of the upper portion of the electrode seated on the table, wherein the separator guide and the pair of upper nozzles linearly reciprocate left and right on the basis of the table, and wherein the table is fixed.

The electrode reel may include a first electrode reel on which a first electrode sheet having a plurality of first electrodes formed thereon is unwound. Additionally or alternatively, the electrode reel may include a second electrode reel on which a second electrode sheet having a plurality of second electrodes formed thereon is unwound.

The pair of upper nozzles may include a first upper nozzle (e.g. as part of or an example of a first adhesive applicator) and a second upper nozzle (e.g. as part of or an example of a second adhesive applicator). The first upper nozzle may apply the adhesive on the upper portion of the first electrode. The second upper nozzle may apply the adhesive on the upper portion of the second electrode.

The first upper nozzle and the second upper nozzle may be arranged on both sides with the separator guide being interposed therebetween.

The first electrode may be seated on a first region of the separator sheet. The second electrode maybe seated on a second region of the separator sheet.

When the first electrode is seated on the first region of the separator sheet, the first upper nozzle may linearly move on the first electrode. Additionally or alternatively, when the second electrode is seated on the second region of the separator sheet, the second upper nozzle may linearly move on the second electrode.

When the first upper nozzle applies the adhesive to at least a part of the upper portion of the first electrode, the separator guide may linearly move in a direction in which the separator sheet covers the first electrode. Additionally or alternatively, when the second upper nozzle applies the adhesive to at least a part of the upper portion of the second electrode, the separator guide may linearly move in a direction in which the separator sheet covers the second electrode.

The apparatus for manufacturing a battery cell may include a lower nozzle that applies the adhesive to a lower portion of the first electrode and/or a lower portion of the second electrode, respectively.

The apparatus for manufacturing a battery cell may further include a first head (or header, e.g. as part of or an example of a first electrode supply unit, e.g. as part of or an example of a first electrode placement device) that adsorbs the first electrode and seats it on the first region; and/or a second head (or header, e.g. as part of or an example of a second electrode supply unit, e.g. as part of or an example of a second electrode placement device) that adsorbs the second electrode and seats it on the second region.

When the first electrode is adsorbed to the first head, the lower nozzle may apply the adhesive to the lower portion of the first electrode. Additionally or alternatively, when the second electrode is adsorbed to the second head, the lower nozzle may apply the adhesive to the lower portion of the second electrode.

The apparatus for manufacturing a battery cell may include a first transfer device (e.g. as part of or as an example of a first electrode supply unit) that transfers the first electrode toward the table; and/or a second transfer device (e.g. as part of or as an example of a second electrode supply unit) that transfers the second electrode toward the table.

The first transfer device may include a first slit (or groove) that is opened toward the first electrode, so that the lower nozzle can apply the adhesive to the lower portion of the first electrode via the first slit. The second transfer device may include a second slit (or groove) that is opened toward the second electrode, so that the lower nozzle can apply the adhesive to the lower portion of the second electrode via the second slit.

According to another example of the present disclosure, there is provided a method for manufacturing a battery cell, the method comprising the steps of: cutting a first electrode sheet unwound from a first electrode reel (e.g. as part of or an example of a first electrode supply unit) to form a plurality of first electrodes; seating a separator sheet unwound from a separator reel (e.g. as part of or an example of a separator supply unit) on a table (e.g. as part of or an example of a stacking table) along a separator guide; applying an adhesive to a lower portion of the first electrode from a lower nozzle (e.g. as part of or an example of a bottom-side adhesive applicator); seating the first electrode on a first region of the separator sheet; applying an adhesive to an upper portion of the first electrode from a first upper nozzle (e.g. as part of or an example of a first adhesive applicator); and folding the separator sheet in a folding direction guided by the separator guide, so that the second region of the separator sheet covers the first electrode.

After the step of covering the upper portion of the first electrode, the method may further include a step of cutting a second electrode sheet unwound from a second electrode reel (e.g. as part of or an example of a second electrode supply unit) to form a plurality of second electrodes; a step of applying an adhesive to a second electrode from a lower nozzle (e.g. as part of or an example of a bottom-side applicator); a step of seating the second electrode on a second region of the separator sheet; a step of applying an adhesive to an upper portion of the second electrode from a second upper nozzle (e.g. as part of or an example of a second adhesive applicator); and a step of folding the separator sheet in a folding direction guided by the separator guide, so that the first region of the separator sheet covers the second electrode.

The table may be fixed. The separator guide, the first upper nozzle and/or the second upper nozzle may linearly reciprocate on the basis of the table.

According to another example of the present disclosure, there is provided an electrode assembly in which an electrode and a separator sheet are alternately stacked, wherein the electrode includes a first electrode and a second electrode, wherein the separator sheet has a zigzag shape formed by being folded at least twice, wherein the separator sheet is folded in a state where the first electrode is seated on a first region of the separator sheet, so that a second region of the separator sheet covers the first electrode, and is folded in a state where the second electrode is seated on the second region, so that the first region of the separator sheet covers the second electrode, and wherein an adhesive layer is formed between the electrode and the separator sheet.

The adhesive layer may include a first adhesive layer and/or a second adhesive layer. The first adhesive layer may be located between the lower portion of the electrode and the separator sheet. The second adhesive layer may be located between the upper portion of the electrode and the separator sheet.

The first adhesive layer and/or the second adhesive layer may be respectively formed by applying an adhesive in the form of a plurality of dots.

According to yet another example of the present disclosure, there is provided a battery cell comprising the above-mentioned electrode assembly, wherein the battery cell includes a battery case that houses the electrode assembly together with an electrolytic solution, and wherein the adhesive layer may be dissolved in the electrolytic solution.

As far as technically feasible, features, elements and/or functionalities of the examples listed above may be combined with, integrated in and/or substituted with any of the features, elements and/or functionalities of any one of the other examples described herein and vice-versa.

Although examples of the present invention have been described in detail above, the scope of the present invention is not limited thereto. Various modifications and improvements made by those skilled in the art using the basic concepts of the present disclosure also fall within the scope of the present invention as defined by the appended claims.

### DESCRIPTION OF REFERENCE NUMERALS

1: cell manufacturing apparatus
11: electrode
16: table
17: nozzle
111: first electrode reel
112: second electrode reel
121: separator reel
122: separator sheet
125: separator guide
131: first cutter
132: second cutter
141: first transfer device
142: second transfer device
151: first head
152: second head
171: first upper nozzle
172: second upper nozzle
1111: first electrode sheet
1112: first electrode
1121: second electrode sheet
1122: second electrode
1221: first region
1222: second region
1710: first adhesive layer
1750: second adhesive layer

## Claims

1. An apparatus (1) for manufacturing an electrode assembly (10) for use in a battery, the apparatus (1) comprising:
an electrode supply unit (111, 112, 141, 142, 151, 152) configured to provide a plurality of electrodes (1112, 1122);
a separator supply unit (121) configured to provide a continuous separator sheet (122);
a stacking table (16) for stacking the electrodes (1112, 1122) thereon with the separator sheet (122) folded between the electrodes (1112, 1122) to form the electrode assembly (10);
a separator guide (125) configured to guide the folding of the separator sheet (122); and
a first adhesive applicator (171, 172) configured to apply an adhesive to an electrode (1112, 1122) arranged on the stacking table (16) and/or to at least a part of the separator sheet (122) located between the separator guide (125) and the stacking table (16),
wherein the separator guide (125) and the first adhesive applicator (171, 172) are configured to move along a first direction relative to the stacking table (16) and/or vice-versa.

2. The apparatus (1) of claim 1, wherein:
the stacking table (16) is fixed or configured to be fixed at least along the first direction and the separator guide (125) and the first adhesive applicator (171, 172) are configured to move back and forth along the first direction; and/or
the first adhesive applicator (171, 172) is configured to apply the adhesive to said electrode (1112, 1122) arranged on the stacking table (16) while moving along the first direction.

3. The apparatus (1) of claim 1 or 2, wherein the electrode supply unit (111, 112, 141, 142, 151, 152) comprises a first electrode supply unit (111, 141, 151) configured to provide a plurality of first electrodes (1112) and a second electrode supply unit (112, 142, 152) configured to provide a plurality of second electrodes (1122), wherein the separator guide (125) and the first adhesive applicator (171, 172) are configured to move back and forth between the first and second electrode supply units (111, 112, 141, 142, 151, 152) and/or the stacking table (16) is configured to move back and forth between the first and second electrode supply units (111, 112, 141, 142, 151, 152), in particular wherein the first electrode supply unit (111, 141, 151) is configured to arrange a first electrode (1112) on a first portion (1221) of the separator sheet (122) and the second electrode supply unit (112, 142, 152) is configured to arrange a second electrode (1122) on a second portion (1222) of the separator sheet (122).

4. The apparatus (1) of claim 3, further comprising a second adhesive applicator (172), wherein:
the first adhesive applicator (171) is configured to apply the adhesive to a first electrode (1112) arranged on the stacking table (16), to at least a part of a portion (1221) of the separator sheet (122) that the first electrode (1112) is to be arranged on and/or to at least a part of a portion (1222) of the separator sheet (122) that is to cover said first electrode (1112) in the electrode assembly (10); and
the second adhesive applicator (172) is configured to apply the adhesive to a second electrode (1122) arranged on the stacking table (16), to at least a part of a portion (1222) of the separator sheet (122) that the second electrode (1122) is to be arranged on and/or to at least a part of a portion (1221) of the separator sheet (122) that is to cover said second electrode (1122) in the electrode assembly (10).

5. The apparatus (1) of claim 4, wherein the separator guide (125) is configured to guide the separator sheet (122) such that the first and second adhesive applicators (171, 172) are arranged on opposite sides of the separator sheet (122), in particular wherein:
the second adhesive applicator (172) is configured to apply the adhesive to said part of said portion (1221) of the separator sheet (122) that the second electrode (1122) is to be arranged on while the first adhesive applicator (171) applies the adhesive to said first electrode (1112) arranged on the stacking table (16); and/or
the first adhesive applicator (171) is configured to apply the adhesive to said part of said portion (1221) of the separator sheet (122) that the first electrode (1112) is to be arranged on while the second adhesive applicator (171) applies the adhesive to said second electrode (1122) arranged on the stacking table (16).

6. The apparatus (1) of any one of the preceding claims, wherein:
the first adhesive applicator (171) and/or the second adhesive applicator (172) is/are configured to apply the adhesive to an electrode (1112, 1122) arranged on the stacking table (16) while the separator guide (125) moves along the first direction to cover said electrode (1112, 1122) with the separator sheet (122); and/or
the apparatus (1) further comprises one or more bottom-side applicators (173) configured to apply an adhesive to a surface of an electrode (1112, 1122), wherein said surface is to face the stacking table (16) when the respective electrode (1112, 1122) is arranged thereon, in particular wherein the electrode supply unit (111, 112, 141, 142, 151, 152) comprises an electrode placement device (151, 152) that is configured to hold an electrode (1112, 1122) and to place said electrode (1112, 1122) on the stacking table (16), wherein one of said one or more bottom-side applicators (173) is configured to apply the adhesive to said surface of the electrode (1112, 1122) while the electrode (1112, 1122) is being held by said electrode placement device (151, 152), and/or the electrode supply unit (111, 112, 141, 142, 151, 152) comprises a transfer device (141, 142) configured to transfer an electrode (1112, 1122) on a transfer surface of said transfer device (141, 142) towards the stacking table (16), wherein said transfer surface comprises an opening (141a') and one of said one or more bottom-side applicators (173) is configured to apply the adhesive to said surface of the electrode (1112, 1122) through said opening (141a').

7. The apparatus (1) of any one of the preceding claims, wherein:
the first adhesive applicator (171) and/or the second adhesive applicator (172) is/are configured to apply the adhesive by applying a plurality of spots of the adhesive and/or a plurality of lines of the adhesive; and/or
the apparatus (1) is configured to execute a method according to any one of claims 9 to 12.

8. The apparatus (1) of any one of the preceding claims, wherein:
the electrode supply unit (111, 112, 141, 142, 151, 152) is or comprises an electrode reel (111, 112) on which an electrode sheet (1111, 1121) having a plurality of electrodes (1112, 1122) formed thereon is unwound; and/or
the separator supply unit (121) is or comprises a separator reel (121) in which a separator sheet (122) that is folded when the electrodes (1112, 1122) are seated, covers the electrodes (1112, 1122) and is stacked with the electrodes (1112, 1122) is unwound; and/or
the stacking table (16) is or comprises a table (16) on which the electrodes (1112, 1122) and the separator sheet (122) are seated on the upper surface; and/or
the separator guide (125) guides a folding direction of the separator sheet (122); and/or
the first adhesive applicator (171, 172) is or comprises a pair of upper nozzles (171, 172) that apply an adhesive to at least a part of the upper portion of the electrode (1112, 1122) seated on the table (16); and/or
the separator guide (125) and the pair of upper nozzles (171, 172) linearly reciprocate left and right on the basis of the table (16); and/or
the table (16) is fixed.

9. A method of manufacturing an electrode assembly (10) for use in a battery, the method comprising the steps of:
arranging a first portion (1221) of a continuous separator sheet (122) on a stacking table (16);
arranging a first electrode (1112) on said first portion (1221) of the separator sheet (122);
applying an adhesive to said first electrode (1112) and/or to at least a part of a second portion (1222) of said separator sheet (122) using a first adhesive applicator (171, 172); and
folding said separator sheet (122) to cover said first electrode (1112) arranged on the first portion (1221) with said second portion (1222) of the separator sheet (122) with the adhesive being arranged between said first electrode (1112) and said second portion (1222), wherein the separator sheet (122) is folded using a separator guide (125) to guide the separator sheet (122),
wherein the separator guide (125) and the first adhesive applicator (171, 172) are moved along a first direction relative to the stacking table (16) and/or vice-versa while applying the adhesive and/or while folding said separator sheet (122).

10. The method of claim 9, wherein after folding said separator sheet (122) to cover said first electrode (1112), the method further comprises:
arranging a second electrode (1122) on said second portion (1222) of the separator sheet (122);
applying an adhesive to said second electrode (1122) and/or to at least a part of a third portion (1221) of said separator sheet (122) using a second adhesive applicator (172); and
folding said separator sheet (122) to cover said second electrode (1122) arranged on the second portion (1222) with said third portion (1221) of the separator sheet (122) with the adhesive being arranged between said second electrode (1122) and said third portion (1221), wherein the separator sheet (122) is folded using the separator guide (125) to guide the separator sheet (122),
in particular wherein the separator guide (125) and the second adhesive applicator (172) are moved along the first direction relative to the stacking table (16) and/or vice-versa while applying the adhesive using the second adhesive applicator (172) and/or while folding said separator sheet (122) to cover said second electrode (1122).

11. The method of claim 9 or 10, wherein:
the stacking table (16) is fixed at least along the first direction and at least while applying the adhesive and/or folding said separator sheet (122), wherein the separator guide (125), the first adhesive applicator (171) and/or the second adhesive applicator (172) are moved along the first direction while applying the adhesive and/or folding said separator sheet (122); and/or
the adhesive is applied to said first electrode (1112) while folding said separator sheet (122) to cover said first electrode (1112) and/or the adhesive is applied to said second electrode (1122) while folding said separator sheet (122) to cover said second electrode (1122); and/or
the method further comprises applying the adhesive to least a part of the first portion (1221) of the separator sheet (122) before arranging the first electrode (1112) thereon and/or applying the adhesive to least a part of the second portion (1222) of the separator sheet (122) before arranging the second electrode (1122) thereon; and/or
the method further comprises applying an adhesive to a surface of the first electrode (1112) and/or a surface of the second electrode (1122) prior to arranging the respective electrode (1112, 1122) on the first and second portion (1221, 1222), respectively, of the separator sheet (122) with said surface facing the first and second portion (1221, 1222), respectively, of the separator sheet (122).

12. The method of any one of claims 9 to 11, wherein:
the method comprises cutting a first electrode sheet (1111) unwound from a first electrode reel (111) to form a plurality of first electrodes (1112); and/or
the step of arranging said first portion (1221) of the separator sheet (122) is or comprises seating a separator sheet (122) unwound from a separator reel (121) on a table (16) along a separator guide (125); and/or
the method comprises applying an adhesive to a lower portion of the first electrode (1112) from a lower nozzle (173); and/or
arranging the first electrode (1112) on said first portion (1221) of the separator sheet (122) is or comprises seating the first electrode (1112) on a first region (1221) of the separator sheet (122); and/or
applying the adhesive to said first electrode (1112) and/or to said part of the second portion (1222) of said separator sheet (122) is or comprises applying an adhesive to an upper portion of the first electrode (1112) from a first upper nozzle (171); and/or
folding the separator sheet (122) to cover said first electrode (1112) is or comprises folding the separator sheet (122) in a folding direction guided by the separator guide (125), so that the second region (1222) of the separator sheet (122) covers the first electrode (1112).

13. An electrode assembly (10) for use in a battery, the electrode assembly (10) comprising a plurality of first electrodes (1112) and a plurality of second electrodes (1122), wherein:
the first and second electrodes (1112, 1122) are alternately stacked and separated from each other by a separator sheet (122) that is folded between the first and second electrodes (1112, 1122) in a zigzag shape; and
an adhesive is arranged between the separator sheet (122) and the first electrodes (1112) and/or between the separator sheet (122) and the second electrodes (1122), wherein some or all of said adhesive has been arranged between the separator sheet (122) and the first and/or second electrodes (1112, 1122) by applying the adhesive to a surface of the respective electrode (1112, 1122) prior to arranging said surface on the separator sheet (122) and/or covering said surface with the separator sheet (122).

14. The electrode assembly (10) of claim 13, wherein:
some or all of said adhesive is arranged in a plurality of spots and/or lines; and/or
some or all of said adhesive has been arranged between the separator sheet (122) and the first and/or second electrodes (1112, 1122) by applying the adhesive to a first surface of the respective electrode (1112, 1122) prior to arranging said first surface on the separator sheet (122) and applying the adhesive to a second surface of the respective electrode (1112, 1122) opposite to the first surface prior to covering said second surface with a respective portion (1221, 1222) of the separator sheet (122); and/or
some or all of said adhesive has been arranged between the separator sheet (122) and the first and/or second electrodes (1112, 1122) by applying the adhesive to a first surface of the respective electrode (1112, 1122) prior to arranging said first surface on a respective first portion (1221, 1222) of the separator sheet (122) and to a respective second portion (1222, 1221) of the separator sheet (122) prior to covering a second surface of the respective electrode (1112, 1122) opposite to the first surface with said second portion (1222, 1221) of the separator sheet (122) and/or by applying the adhesive to a respective first portion (1221, 1222) of the separator sheet (122) prior to arranging a first surface of the respective electrode (1112, 1122) on said first portion of the separator sheet (122) and to a second surface of the respective electrode (1112, 1122) opposite to the first surface prior to covering said second surface with a respective second portion (1222, 1221) of the separator sheet (122).

15. A battery cell comprising an electrode assembly (10) according to claim 13 or 14 and a battery case (50) housing the electrode assembly (10) together with an electrolytic solution, wherein the adhesive has been dissolved in the electrolytic solution at least in part.
